(19) Europäisches Patentamt
European Patent Office
Office européen des brevets

(11) EP 2 402 132 A1

(12) EUROPEAN PATENT APPLICATION
published in accordance with Art. 153(4) EPC

(43) Date of publication:
**04.01.2012 Bulletin 2012/01**

(21) Application number: **10746019.8**

(22) Date of filing: **26.02.2010**

(51) Int Cl.:
***B29C 33/38*** (2006.01) ***B29C 33/42*** (2006.01)
***C03B 23/025*** (2006.01) ***G02B 3/00*** (2006.01)
***G02C 7/06*** (2006.01) ***B29L 11/00*** (2006.01)

(86) International application number:
**PCT/JP2010/001343**

(87) International publication number:
**WO 2010/098136 (02.09.2010 Gazette 2010/35)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **27.02.2009 JP 2009046706**
**25.03.2009 JP 2009072986**

(71) Applicant: **Hoya Corporation**
**Tokyo 161-8525 (JP)**

(72) Inventors:
- **TAGUCHI, Noriaki**
  **Tokyo 161-8525 (JP)**
- **TAKIZAWA, Shigeru**
  **Tokyo 161-8525 (JP)**

(74) Representative: **Adam, Holger**
**Kraus & Weisert**
**Patent- und Rechtsanwälte**
**Thomas-Wimmer-Ring 15**
**80539 München (DE)**

# (54) METHOD OF PRODUCING MOLD FOR LENS AND METHOD OF PRODUCING EYEGLASS LENS

(57) The present invention relates to a method of manufacturing a lens casting mold in which an upper surface of a glass material being formed is formed into a shape of a molding surface for forming a surface comprising a progressive surface or a progressive element by using a continuous heating furnace. As the forming mold, a forming mold having a curvature distribution on the forming surface is utilized. In one aspect, a temperature of the continuous heating furnace is controlled so that the continuous heating furnace comprises a temperature rising region having a temperature distribution such that the temperature rises in a conveyance direction of the forming mold, and a separation distance between the forming surface of the forming mold and a lower surface of the glass material being formed is specified in two or more spots before introduction to the continuous heating furnace. The forming mold is conveyed in the temperature rising region so that a portion with the greatest separation distance among the specified separation distances is comprised in a portion on a side of the conveyance direction as divided in two by a virtual line, the virtual line running orthogonally to the conveyance direction of the forming mold and passing through a geometric center of the forming surface. In another aspect, a forming mold position control region is provided in the continuous heating furnace, a temperature is directly or indirectly measured at multiple measurement points on the forming surface in the forming mold position control region, and the forming mold is conveyed so that a portion on the forming surface of greatest curvature is present in a high temperature portion that has been determined based on the measurement result. A virtual line A passing through a geometric center and a maximum temperature point among the multiple measurement points is specified, and then a portion containing the maximum temperature point as divided in two by a virtual line B running orthogonally to the virtual line A and passing through the geometric center is determined as the high temperature portion.

[Fig. 4]

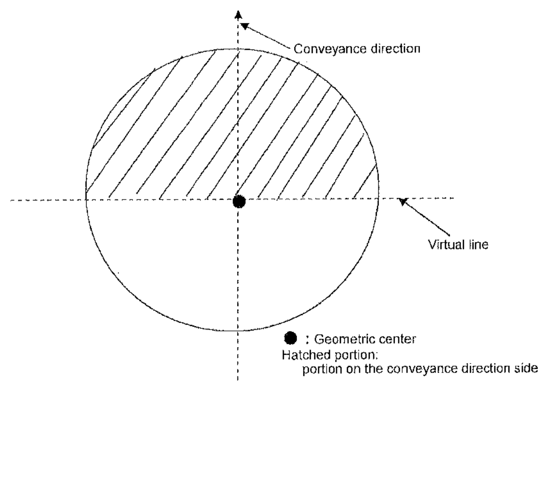


EP 2 402 132 A1

## Description

CROSS-REFERENCE TO RELATED APPLICATIONS

This application claims the benefit of priority to Japanese Patent Application No. 2009-46706 filed on February 27, 2009 and Japanese Patent Application No. 2009-72986 filed on March 25, 2009, which are expressly incorporated herein by reference in their entirety.

TECHNICAL FIELD

The present invention relates to a method of manufacturing a lens casting mold by hot sag forming method, and a method of manufacturing an eyeglass lens using the lens casting mold manufactured.

BACKGROUND OF THE ART

Methods of forming glass molds for eyeglass lenses include employing mechanical grinding and polishing methods, mechanical grinding methods, and electrical processing methods such as electrical discharge processing to produce a heat-resistant base mold, bringing this base mold into contact with a glass blank softened by heating to transfer the surface shape of the base mold, employing a grinding program for each surface shape to be obtained, and forming a base mold having a corresponding surface shape.

In recent years, the demand has increased for multifocal eyeglass lenses being made thinner and lighter by incorporation of axially symmetric, aspherical lens design. The hot sag molding method has been proposed (see Japanese Unexamined Patent Publication (KOKAI) Heisei Nos. 6-130333 and 4-275930, which are expressly incorporated herein by reference in their entirety) as a method for forming molds to produce eyeglass lenses having such complex shapes.

In the hot sag forming method, a glass material is placed on a mold, and softened by being heated to a temperature greater than or equal to its softening point, causing it to tightly contact with the mold. The shape of the mold is thus transferred to the upper surface of the glass material, yielding a formed article of desired surface shape. The glass material can be heated in a batch-type heating furnace or continuous heating furnace, but to achieve production efficiency, continuous heating furnaces are widely employed.

As the object being heated is being conveyed within a continuous heating furnace, it is possible to continuously conduct a series of processes within the furnace in the form of a temperature-rising step, an elevated temperature-maintaining step, a temperature-lowering step and the like by controlling the temperature within the furnace so as to impart a prescribed temperature distribution in the conveyance direction. However, in a continuous heating furnace, the amount of change in various parts of the surface of the object being heated tends to be nonuniform due to the presence of the temperature distribution in the conveyance direction, as stated above. For example, when a glass material is formed by the hot sag forming method in a continuous heating furnace having a temperature distribution such that the temperature rises from the inlet to the outlet, the glass material heats up rapidly and the amount of deformation increases greater at the front part. When the amount of deformation varies with the position of the glass material in this manner, the timing at which the lower surface of the glass material contacts the forming surface of the mold varies greatly with position, producing astigmatism that is unnecessary in eyeglass correction and sometimes compromising the sensation created by wearing the eyeglass because the deviation from the design value is asymmetric.

In contrast, Japanese Unexamined Patent Publication (KOKAI) Showa No. 63-306390, which is expressly incorporated herein by reference in its entirety, proposes increasing the uniformity of heating by rotating the object being heated within the furnace in the course of sintering, metallizing, joining by brazing, and the like a ceramic product in a continuous heating furnace. However, when the glass material is rapidly rotated during softening in the course of forming a glass material by the hot sag forming method, there is a risk of reducing molding precision. In addition, unanticipated astigmatisms due to asymmetry are sometimes produced in the course of forming articles with free curved surface shapes lacking center symmetry, such as casting molds for progressive dioptric power lenses, by the hot sag forming method when achieving uniform heat distribution through simple rotation.

Disclosure of the invention

Accordingly, it is an object of the present invention to provide an eyeglass lens casting mold permitting the molding of an eyeglass lens affording a good wear sensation by the hot sag forming method with a continuous heating furnace.

The present inventors conducted extensive research into achieving the above object, resulting in the following discovery.

Among multifocal eyeglass lenses, progressive dioptric power lenses having a progressive surface the dioptric power of which changes continuously from top to bottom are widely employed as lenses for both distant and near viewing. Within the progressive surface of the progressive dioptric power lens, the curvature of the portion for near portion is great (the curve is deep), and the curvature of the far portion is small (the curve is shallow). Accordingly, the molding surface of the mold for forming the progressive surface also has a great degree of curvature in the portion for molding the near portion, and a small degree of curvature in the portion for molding the far portion. Moreover, in the forming surface of the forming mold for forming the above molding surface of the mold by the hot sag forming method, the curvature of the portion corresponding to the portion of the molding surface of the mold for molding the near portion is great and the curvature of the portion corresponding to the portion for molding the far portion is small. Therefore, when a glass material being formed is placed on such a forming surface, the distance between the forming surface of the forming mold and the lower surface of the glass material being formed varies across the surface.
Accordingly, the present inventors utilized these shape characteristics and the nonuniformity of heating in a continuous heating furnace, and discovered that the deformation due to heat softening could be controlled and the mold-forming surface could be readily formed by conveying the forming mold so that the portion in which the distance between the forming surface of the forming mold and the lower surface of the glass material was considerable was in front, in a region in which the temperature rose in the direction of conveyance of the forming mold in a continuous heating furnace. This was because it was possible to control the amount of deformation using the temperature distribution within the furnace by positioning the portion that required considerable deformation on the high temperature side.
The first aspect of the present invention was devised on the basis of this discovery.

The first aspect of the present invention relates to a method of manufacturing a lens casting mold by introducing a forming mold, with a forming surface on which a glass material being formed is positioned, into a continuous heating furnace and conducting thermal treatment while conveying the forming mold in the furnace to form an upper surface of the glass material being formed into a shape of a molding surface for forming a surface comprising a progressive surface or a progressive element, comprising:

controlling a temperature of the continuous heating furnace so that the continuous heating furnace comprises a temperature rising region having a temperature distribution such that the temperature rises in a conveyance direction of the forming mold;
utilizing a forming mold having a curvature distribution on the forming surface as the forming mold; and
specifying a separation distance between the forming surface of the forming mold and a lower surface of the glass material being formed in two or more spots before introduction to the continuous heating furnace;
conveying the forming mold in the temperature rising region so that a portion with the greatest separation distance among the specified separation distances is comprised in a portion on a side of the conveyance direction as divided in two by a virtual line, the virtual line running orthogonally to the conveyance direction of the forming mold and passing through a geometric center of the forming surface.

The conveying in the temperature rising region may be conducted such that a direction running from the geometric center of the forming surface toward the portion with the greatest separation distance approximately overlaps the conveyance direction.

The temperature of the continuous heating furnace may be controlled so as to comprise, from a forming mold introduction inlet side, the temperature rising region, a constant temperature maintenance region, and a cooling region in this order.

The foaming mold may be subjected to rotation and fluctuation in the temperature rising region. When the lens casting mold is a progressive dioptric power lens casting mold, a fluctuation angle and amplitude in the rotation and fluctuation may be determined based on an added dioptric powder and/or an inset amount of the progressive dioptric power lens. In addition, in the rotation and fluctuation, the fluctuation angle may range from ±5 to 45° relative to the conveyance direction and the amplitude may range from 0.01 to 1 Hz.

The forming mold may be rotated in the constant temperature maintenance region so that the portion with the greatest separation distance is comprised in a portion on an opposite side from the side in the conveyance direction as divided in two by a virtual line running orthogonally to the conveyance direction of the forming mold and passing through a geometric center of the forming surface.

The temperature of the glass material being formed that is positioned on the forming mold being conveyed in the constant temperature maintenance region may be equal to or higher than a glass transition temperature of the glass.

As described above, on the forming surface of a forming mold for forming a progressive dioptric power lens by the hot sag forming method, there is great curvature in the portion corresponding to the portion for molding the near portion and little curvature in the portion corresponding to the portion for molding the far portion of the molding surface of the mold. In contrast, in a continuous heating furnace, even when the temperature within the furnace is controlled, the temperature distribution of the atmosphere within the furnace does not necessarily match the temperature distribution on the forming mold. For example, in a continuous heating furnace having a temperature distribution such that the temperature increases from the inlet to the outlet, when the interior of the furnace is divided with partitions and the like, the temperature distribution is disrupted near the partitions, sometimes causing the high temperature side of the forming mold not to overlap the direction of conveyance of the forming mold.
Accordingly, the present inventors noted these shape characteristics and the nonuniformity of heating in a continuous heating furnace, and discovered that deformation by heat softening could be controlled and thus the molding surface of the mold could be readily formed by monitoring the temperature distribution on the forming surface of the forming mold in the continuous heating furnace and conveying the forming mold (with the glass material having been placed on the forming surface thereof) so that the side corresponding to the portion for molding the near portion was positioned on the high temperature side. This was because it was possible to exploit the temperature distribution within the furnace and control the amount of deformation by positioning the side corresponding to the portion for molding the near portion, which required considerable deformation on the high temperature side since the amount of deformation on the side for molding the near portion was great and the amount of deformation on the side for molding the far portion was little, when forming a progressive surface by the hot sag forming method.
The second aspect of the present invention was devised on the basis of the above discovery.

The second aspect of the present invention relates to a method of manufacturing a lens casting mold by introducing a forming mold, with a forming surface on which a glass material being formed is positioned, into a continuous heating furnace and conducting thermal treatment while conveying the forming mold in the furnace to form an upper surface of the glass material being formed into a shape of a molding surface for forming a surface comprising a progressive element or a progressive surface, comprising:

utilizing a forming mold having a curvature distribution on the forming surface as the forming mold; and
providing a forming mold position control region in the continuous heating furnace, directly or indirectly measuring a temperature at multiple measurement points on the forming surface in the forming mold position control region, and conveying the forming mold so that a portion on the forming surface of greatest curvature is present in a high temperature portion that has been determined based on the measurement result, as well as
specifying a virtual line A passing through a geometric center and a maximum temperature point among the multiple measurement points, and then determining a portion containing the maximum temperature point as divided in two by a virtual line B running orthogonally to the virtual line A and passing through the geometric center as the high temperature portion.

The above manufacturing method may comprise conveying the forming mold so that a direction running from the geometric center toward the maximum temperature point on the virtual line A approximately overlaps a direction on which an average curvature from the geometric center to a perimeter portion of the forming surface peaks.

The portion on the forming surface of greatest curvature may be at a position corresponding to a reference point for measurement of near portion of the lens.

The forming mold position control region may comprise a region in which a temperature of the upper surface of the glass material being formed reaches equal to or greater than a temperature of a glass transition temperature Tg - 100°C.

The temperature of the continuous heating furnace may be controlled so as to comprise a temperature rising region having a temperature distribution such that the temperature rises in a conveyance direction of the forming mold and the temperature rising region may comprise the forming mold position control region.

In the temperature rising region, the measurement points may be provided only in the portion on the conveyance direction side as divided in two by a virtual line C running orthogonally to the conveyance direction and passing through the geometric center of the forming surface.

The multiple measurement points may be established at equal angular intervals.

A single temperature measuring apparatus may be disposed at a position in contact with the forming surface or in the vicinity of the forming surface, the forming mold may be rotated in the forming mold position control region, and the temperature of each measurement point may be sequentially measured by the temperature measuring apparatus.

Temperature measuring apparatuses may be respectively disposed for measuring the temperature of each of the multiple measurement points.

A further aspect of the present invention relates to a method of manufacturing an eyeglass lens comprising:

manufacturing a lens casting mold by the above manufacturing method; and
manufacturing an eyeglass lens by cast polymerization with the lens casting mold that has been manufactured, or some part thereof, as a casting mold. The eyeglass lens thus manufactured may be a progressive dioptric power lens.

The present invention permits the manufacturing with high production efficiency of progressive dioptric power lens casting molds capable of molding progressive dioptric power lenses affording an excellent wear sensation. This makes it possible to provide an eyeglass lens affording an excellent wear sensation.

BRIEF DESCRIPTION OF THE DRAWINGS

[Fig. 1] Fig. 1 shows a descriptive drawing of the hot sag forming method.
[Fig. 2] Fig. 2 shows an example (sectional view) of glass that is essentially equal in thickness in the normal direction.
[Fig. 3] Fig. 3 shows an example of the arrangement of a glass material being formed and a forming mold.
[Fig. 4] Fig. 4 is a descriptive drawing of the conveyance direction of the forming mold in the temperature rising region.
[Fig. 5] Fig. 5 shows an example of the arrangement of the position corresponding to a reference point for measurement of far portion and the position corresponding to a reference point for measurement of near portion on the forming surface of the forming mold.
[Fig. 6] Fig. 6 is a descriptive drawing of contact between the forming surface of a forming mold and the lower surface of a glass material for manufacturing a casting mold for progressive dioptric power lenses.
[Fig. 7] Fig. 7 shows the layout of sensors used to determine the temperature distribution in a continuous heating furnace.
[Fig. 8] Fig. 8 shows the layout in an electric furnace during the determination of the temperature distribution in a continuous heating furnace.
[Fig. 9] Fig. 9 shows the results of determination (measurement (center portion) deviation results) of the temperature distribution in a continuous heating furnace.
[Fig. 10] Fig. 10 shows the results of determination (of the temperature distribution in the direction of advance and in a direction orthogonal to the direction of advance) of the temperature distribution in a continuous heating furnace.
[Fig. 11] Fig. 11 shows shape errors relative to design values in the shape of the upper surface of the glass material formed in Example 1.
[Fig. 12] Fig. 12 shows errors relative to design values in the shape of the upper surface of the glass material formed in Comparative Example 1.
[Fig. 13] Fig. 13 is a descriptive drawing of the method of determining the high temperature portion on the forming surface.
[Fig. 14] Fig. 14 is a descriptive drawing of the method of determining the direction of the maximum average curvature on the forming surface of the forming mold.
[Fig. 15] Fig. 15 is a descriptive drawing of the method of determining the direction of the maximum average curvature on the forming surface of the forming mold.
[Fig. 16] Fig. 16 is a descriptive drawing of the method of determining the direction of the maximum average curvature on the forming surface of the forming mold.
[Fig. 17] Fig. 17 is a descriptive drawing of the method of determining the direction of the maximum average curvature on the forming surface of the forming mold.
[Fig. 18] Fig. 18 is a descriptive drawing of the method of determining the direction of the maximum average curvature on the forming surface of the forming mold.
[Fig. 19] Fig. 19 is a descriptive drawing of the method of determining the direction of the maximum average curvature on the forming surface of the forming mold.
[Fig. 20] Fig. 20 is a descriptive drawing of the method of determining the direction of the maximum average curvature on the forming surface of the forming mold.

MODE FOR CARRYING OUT THE INVENTION

The present invention relates to a method of manufacturing a progressive dioptric power lens casting mold by introducing a forming mold, with a forming surface on which a glass material being formed (also simply referred to as a "glass material", hereinafter) is positioned, into a continuous heating furnace and conducting thermal treatment while conveying the forming mold in the furnace to form an upper surface of the glass material being formed into a shape of a molding surface for forming a surface comprising a progressive surface or a progressive element.

The manufacturing method according to the first aspect of the present invention comprises controlling a temperature of the continuous heating furnace so that the continuous heating furnace comprises a temperature rising region having a temperature distribution such that the temperature rises in a conveyance direction of the forming mold; utilizing a forming mold having a curvature distribution on the forming surface as the forming mold; and specifying a separation distance between the forming surface of the forming mold and a lower surface of the glass material being formed in two or more spots before introduction to the continuous heating furnace; conveying the forming mold in the temperature rising region so that a portion with the greatest separation distance among the specified separation distances is comprised in a portion on a side of the conveyance direction as divided in two by a virtual line, the virtual line running orthogonally to the conveyance direction of the forming mold and passing through a geometric center of the forming surface.

The manufacturing method according to the second aspect of the present invention comprises utilizing a forming mold having a curvature distribution on the forming surface as the forming mold; and providing a forming mold position control region in the continuous heating furnace, directly or indirectly measuring a temperature at multiple measurement points on the forming surface in the forming mold position control region, and conveying the forming mold so that a portion on the forming surface of greatest curvature is present in a high temperature portion that has been determined based on the measurement result. And a virtual line A passing through a geometric center and a maximum temperature point among the multiple measurement points is specified, and a portion containing the maximum temperature point as divided in two by a virtual line B running orthogonally to the virtual line A and passing through the geometric center is then determined as the high temperature portion.

The casting mold manufactured by the present invention has a molding surface shape for forming a surface comprising a progressive element or a progressive surface, and is preferably a progressive dioptric power lens casting mold. The term "progressive dioptric power lenses" refers to lenses having a progressive surface comprising a far portion and a near portion, in which the dioptric power changes progressively from the far portion to the near portion. Progressive dioptric power lenses include convex (exterior) progressive dioptric power lenses, in which the progressive surface is disposed within a convex surface, and concave (interior) progressive dioptric power lenses, in which the progressive surface is disposed within a concave surface. Convex progressive dioptric power lenses have a progressive surface within a convex surface and achieve progressive dioptric power by means of the shape of the convex optical surface. Concave progressive dioptric power lenses are similar, with the exception that they are concave instead of convex. The progressive dioptric power lens that can be molded by a casting mold manufactured according to the present invention can be either of these embodiments.

In the present invention, the lens casting mold is manufactured by the hot sag forming method.
Fig. 1 shows a descriptive drawing of the hot sag forming method.
Normally, in the hot sag forming method, the glass material being formed is subjected to thermal treatment while positioned on the forming mold in a state where the center of the lower surface of the glass material is separated from the forming surface of the forming mold (Fig. 1(a)). Thus, the lower surface of the glass material being formed deforms under its own weight, coming into tight contact with the forming surface of the forming mold (Fig. 1(b)) and causing the shape of the forming surface of the forming mold to be transferred to the upper surface of the glass material. As a result, the upper surface of the glass material can be formed into a desired shape. A casting mold that is thus manufactured can be used as the upper or lower mold of a mold for manufacturing plastic lenses by the casting polymerization method. More specifically, an upper mold and a lower mold can be assembled by means of a gasket or the like into a mold such that the upper surface of a glass material being formed by the hot sag forming method is positioned within the mold, and a plastic lens starting material liquid can be cast into the cavity of the mold and caused to polymerize, yielding a lens with a desired surface shape, such as progressive surface.

In the progressive surface, the curvature of the near portion is maximum (the radius of curvature is minimum), and the curvature of the far portion is minimum (the radius of curvature is maximum). Accordingly, the curvature of the portion for molding the near portion is also maximum and the curvature of the portion for molding the far portion is also minimum in the molding surface of the casting mold (the surface positioned within the cavity of the forming mold during casting polymerization). In the forming surface of the forming mold for use in the hot sag forming method for manufacturing the above casting mold, the curvature is also maximum in the portion corresponding to the portion for molding the near portion (the portion for molding the upper surface of the glass material into the portion for molding the near portion), and the curvature is also minimum in the portion corresponding to the portion for molding the near portion (the portion for molding the upper surface of the glass material into the portion for molding the far portion). That is, the forming mold has a curvature distribution on the forming surface, with at least a portion of the forming surface having different curvatures at any two points. The forming surface of the forming mold for forming a surface comprising a progressive element also has a curvature variation within the surface, and thus has a curvature distribution within the surface.

Disposing the glass material being formed on the forming surface of a forming mold having different curvatures within the surface thereof results in different separation distances between the lower surface of the glass material being formed and the forming surface of the forming mold at different positions. For example, the separation distance between the portion corresponding to the portion for molding the near portion and the opposing lower surface of the forming mold increases, while the separation distance between the portion corresponding to the portion for molding the far portion and the opposing lower surface of the forming mold decreases.
Accordingly, in the first aspect of the present invention, prior to introducing into the continuous heating furnace a forming mold on which has been disposed the glass material being formed, the separation distance between the forming surface of the forming mold and the lower surface of the glass material being formed is specified at two or more spots, the temperature of the continuous heating furnace is controlled so that a temperature rising region having a temperature distribution in which the temperature rises in the direction of conveyance of the forming mold is contained in the continuous heating furnace, and the forming mold is conveyed in the temperature rising region so that a portion with the greatest separation distance among the specified separation distances is comprised in a portion on a side of the conveyance direction as divided in two by a virtual line, the virtual line running orthogonally to the conveyance direction of the forming mold and passing through a geometric center of the forming surface. The item being heated is rotated so as to create a uniform state of heating as a countermeasure to the nonuniformity of heating due to the temperature distribution within a continuous heating furnace by the method described in Japanese Unexamined Patent Publication (KOKAI) Showa No. 63-306390 set forth above. By contrast, in the first aspect of the present invention, the nonuniformity of heating within the continuous heating furnace is utilized, the amount of deformation by heating of a single item being heated is intentionally varied, and the continuous heating furnace is used for the large quantity production of lens casting molds with good productivity.

In addition, to cause tight contact of the lower surface of the glass material being formed with the forming surface of a forming mold having different curvatures within the surface thereof as set forth above, it is desirable to induce considerable deformation of the portion that should tightly contact with the portion corresponding to the portion for molding the near portion and induce a lesser amount of deformation in the portion that should tightly contact with the portion corresponding to the portion for molding the far portion.

Accordingly, in the second aspect of the present invention, in a prescribed region within the continuous heating furnace (the forming mold position control region), the forming mold is conveyed so that the portion that should be considerably deformed for tight contact with the forming surface is contained in the high temperature portion of the forming mold. This point will be described below.

A temperature gradient is necessarily generated in the interior of a continuous electric furnace. In other words, there is no continuous electric furnace with a uniform temperature distribution. Accordingly, the temperature distribution on an item being processed will necessarily be nonuniform. Additionally, there are eyeglass lenses with shapes that are center symmetric and those with shapes that are axially symmetric. Lenses comprising a progressive surface, such as progressive dioptric power lenses, have free curved surface shapes lacking simple symmetry. When a shape has center symmetry, it is considered easy to correct temperature nonuniformity by rotation about the geometric center based on the technique described in Japanese Unexamined Patent Publication (KOKAI) Showa No. 63-306390. However, when a shape does not possess axial symmetry or pair symmetry, it is difficult to handle by simple rotation. Accordingly, it has conventionally been difficult to enhance processing precision by achieving uniform heat distribution.

In contrast, the present inventors conducted extensive research resulting in the discovery that when a shape did not have center symmetry, it was not necessary to achieve uniform heat distribution, and that the addition of a large amount of heat in portions with shapes that had to undergo considerable deformation effectively enhanced processing precision. That is, the second aspect of the present invention can enhance processing precision by controlling the distribution of the quantity of heat according to the shape being processed (the shape of the forming mold) by the method described below. Further, it was possible to shorten the deformation time on the side for molding near portion, which had been rate controlling until now, thereby permitting a smaller total deformation (processing) time and thus shortening the processing time.

The first and second aspects of the present invention and items common to both will be described in further detail below. Unless specifically stated otherwise, the items described below are common to both aspects. Any combination of the two aspects is possible.

[Glass material being formed]

The glass material the upper surface of which is formed by being passed through a continuous heating furnace in the present invention is desirably a glass material with a lower surface being a spherical surface, a planar surface, or an aspherical surface with centrosymmetry. The reason for this is that since the lower surface of a glass material that is spherical in shape, for example, has a surface of constant curvature, the difference in the amount of deformation within the surface is particularly pronounced in the course of bringing it into tight contact with the forming surface of a forming mold of varying curvature within the surface. The same applies to a glass material with a lower surface that is planar and an aspherical surface with centrosymmetry. In such cases, as set forth above, the present invention makes it possible to control the amount of deformation caused by heating of the glass material in a continuous heating furnace.

Further, the glass material being formed is desirably one comprising an astigmatic (toric) component on the upper surface in addition to having the above-described lower surface shape.

Details of the lower surface shape of the glass material being formed are as set forth above. By contrast, the upper surface shape of the glass material being formed is not specifically limited, and can be any of shape, such as spherical, planar, or aspherical surface. The glass material being formed preferably has upper and lower surfaces being spherical. The glass material having a constant curvature on both upper and lower surfaces can readily processed and thus using a glass material with such shape is advantageous to increased productivity. The glass material used is preferably a glass material having convex and concave surfaces being spherical as well as being of equal or essentially equal thickness in the normal direction. In this context, the phrase "essentially equal thickness in the normal direction" means that at at least the geometric center of the glass material, the degree of change in thickness as measured in the normal direction is less than or equal to 1.0 percent, preferably less than or equal to 0.8 percent. Fig. 2 shows a schematic sectional view of such glass.

In Fig. 2, glass material 206 has a meniscus shape with concave and convex surfaces, the external shape being round. The surface shapes of the concave surface 202 and the convex surface 201 of the glass material are both spherical.

The term "normal direction" of the two surfaces of the glass material means the direction that is perpendicular to the glass material surface at any position on the surface of the glass material. Accordingly, the normal direction changes at each position on the surface. For example, direction 204 in Fig. 2 denotes the normal direction at point 208 on the concave surface of the glass material. The points of intersection of normal direction 204 with the concave and convex surfaces are 208 and 209, respectively. Thus, the interval between 208 and 209 is the thickness in the normal direction. There are other positions on the concave glass surface, such as 210 and 212, the normal directions of which are 203 and 205, respectively. In normal direction 203, the interval between 210 and 211, and in normal direction 205, the interval between 212 and 213, is the thickness in the normal direction. In a glass material of equal thickness in the normal direction, this spacing between the upper and lower surfaces in the normal direction is a constant value. That is, in glass materials of equal thickness in the normal direction, the upper and lower surfaces are parts of a spherical surface sharing a single center (207 in Fig. 2).

The glass material having the above-described approximately round shape has a shape that is center symmetric at the geometric center thereof. Additionally, since the forming surface of the forming mold has a shape corresponding to a formed article (casting mold), the shape is asymmetric, with the curvature being large in portions corresponding to portions for molding near portions and the curvature being small in portions corresponding to portions for molding far portions. Therefore, in the present invention, by exploiting the nonuniformity of heating in a continuous heating furnace, as described below, in heat softening processing, positions at which the glass material undergoes high levels of shape change are disposed in the high temperature direction, making it possible to readily form a progressive surface having a complex surface shape with various curvature within the surface. As described in WO 2007/058353A1, which is expressly incorporated herein by reference in its entirety, when the glass material approximates a viscoelastic material, the thickness of the glass in the normal direction before and after heat softening in the hot sag forming method essentially does not change. Thus, the use of a glass material that is of equal thickness in the normal direction is advantageous in that it facilitates control of the shape during heat softening.

In order to approximate a glass material to a viscoelastic material, it is desirable for the outer diameter of the glass material to be adequately large relative to the thickness in the normal direction of the glass material, and for the outer diameter of the glass material to be adequately large relative to the amount of distortion in a direction perpendicular to the glass. Specifically, for the glass material employed in the present invention, it is desirable for the thickness in the normal direction to be 2 to 10 mm, preferably 5 to 7 mm. Further, the outer diameter of the glass material is desirably 60 to 90 mm, preferably 65 to 86 mm. The "outer diameter" of the glass material is the distance between any point on the lower surface edge rim portion of the glass material and the opposite point on the edge rim.

The glass material is not specifically limited. Glasses such as crown-based, flint-based, barium-based, phosphate-based, fluorine-containing, and fluorophosphate-based glasses are suitable. In a first example, suitable glass is glass comprising $SiO_2$ $B_2O_3$, and $Al_2O_3$ as the structural components and having the glass material composition of, given as molar percentages, 45 to 85 percent $SiO_2$ 4 to 32 percent $Al_2O_3$, 8 to 30 percent $Na_2O + Li_2O$ (with $Li_2O$ constituting equal to or less than 70 percent of $Na_2O + Li_2O$), the total quantity of ZnO and/or $F_2$ being 2 to 13 percent (where $F_2 < 8$ percent), $Li_2O + Na_2O/Al_2O_3$ being 2/3 to 4/1, and $SiO_2 + Al_2O_3 + Na_2O + Li_2O + ZnO + F_2 > 90$ percent.

In a second example, suitable glass are glass having the glass material composition of, given as molar percentages, 50 to 76 percent $SiO_2$, 4.8 to 14.9 percent $Al_2O_3$, 13.8 to 27.3 percent $Na_2O + Li_2O$ (where $Li_2O$ is less than or equal to 70 percent of $Na_2O + Li_2O$ the total quantity of ZnO and/or $F_2$ being 3 to 11 percent (where $F_2 < 8$ percent), $Li_2O + Na_2O/Al_2O_3$ being 2/3 to 4/1, and $SiO_2 + Al_2O_3 + Li_2O + Na_2O + Li_2O + ZnO + F_2 > 90$ percent.

In a third example, a further suitable glass composition is: $SiO_2$ (63.6 percent), $Al_2O_3$ (12.8 percent), $Na_2O$ (10.5 percent), $B_2O_3$ (1.5 percent), ZnO (6.3 percent), $Li_2O$ (4.8 percent), $As_2O_3$ (0.3 percent), $Sb_2O_3$ (0.2 percent). Other metal oxides, such as MgO, PbO, CdO, $B_2O_3$, $TiO_2$, and $ZrO_2$; coloring metal oxides; and the like may be added to stabilize the glass, facilitate melting, and impart color, so long as they do not exceed 10 percent.

As further characteristics of the glass material, for example, suitable thermal properties are: a distortion point of 450 to 480°C, an annealing point of 480 to 621°C, a softening point of 610 to 770°C, a glass transition temperature (Tg) of 450 to 620°C, a yield point (Ts) of 535 to 575°C, a specific gravity of 2.47 to 3.65 ($g/cm^3$), a refractive index, Nd, of 1.52300 to 1.8061, a thermal diffusion rate of 0.3 to 0.4 $cm^2$ * min, a Poisson ratio of 0.17 to 0.26, a photoelasticity constant of 2.82 x 10E-12, a Young's modulus of 6,420 to 9,000 $kgf/mm^2$, and a coefficient of linear expansion of 8 to 10 x 10E-6/°C. In particular, a glass material with a distortion point of 460°C, an annealing point of 490°C, a softening point of 650°C, a glass transition temperature (Tg) of 485°C, a yield point (Ts) of 535°C, a specific gravity of 2.47 ($g/cm^3$),

a refractive index, Nd, of 1.52300, a thermal diffusion rate of 0.3576 $cm^2$ * min, a Poisson ratio of 0.214, a photoelasticity constant of 2.82 x 10E-12, a Young's modulus of 8,340 $kgf/mm^2$, and a coefficient of linear expansion of 8.5 x 10E-6/°C is particularly preferred.

[Specifying the separation distance and the maximum separation distance portion in the first aspect]

In the first aspect of the present invention, the separation distance between the forming surface of the forming mold and the lower surface of the glass material being formed is specified at two or more spots prior to introducing the forming mold on which has been disposed the glass material being formed into the continuous heating furnace. Specifying the separation distance at two or more spots makes it possible to specify a portion where the separation distance is great and that should be considerably deformed by heat softening (maximum separation distance portion). The separation distance is specified in at least two spots, desirably 2 to 8 spots, and preferably 4 to 360 spots. For example, as shown in Fig. 3, the glass material being formed is lined up with the notch portion of the forming mold and positioned. Adopting the notch direction as a 0° reference direction, the direction orthogonal to the 0° direction is adopted as the 90° direction, and separation distances can be specified at a total of four points in the various directions of 0°, 90°, 180°, and 270°.
For example, the following method can be employed to specify separation distances and the maximum separation distance portion. The term "separation distance" desirably refers to the vertical distance between a point on the surface of the forming surface of the forming mold and a point on the lower surface of the glass material being formed. It is not necessarily required that exact values be obtained when specifying the separation distances; it suffices to specify the relative magnitude of the separation distances at any two or more spots.

(1) Visual specification method

The separation distances and the maximum separation distance portion can be specified by visually observing the state in which the glass material being formed is disposed on the forming mold in a lateral direction.

(2) Method of forming a casting

A casting-forming material such as clay or plaster that can be used to take a casting is first placed on the forming surface (S1). Next, the glass material being formed is pressed downward from above the casting mold and the excess portion of the casting-forming material is pressed out (S2). Subsequently, the glass material being formed is removed from the forming mold to obtain a casting (also referred to as a "gap-size casting" hereinafter) having a thickness corresponding to the separation distance. The gap-size casting that has been obtained is removed from the forming mold and equally divided up into a suitable number (for example, 2 to 360) of specimens (also referred to as "slices" hereinafter) (S3). Each slice is then weighed (S4). The heaviest slice will be of the greatest thickness, that is, will have been sandwiched in the portion where the greatest separation distance was present. Thus, the portion where the heaviest slice was positioned on the mold is specified as the maximum separation distance portion (S5).
The slices are desirably prepared such that at the boundary portion where the gap-size casting is sliced, portions in contact with the position corresponding to the reference point for measurement of far portion and the position corresponding to the reference point for measurement of near portion on the forming surface are contained intact. That is, portions in contact with the position corresponding to the reference point for measurement of far portion on the forming surface and the portion in contact with the position corresponding to the reference point for measurement of near portion are desirably contained in the same slice. However, when the number of slices is large, such as 360, this does not apply. Further, the glass material being formed and the forming mold employed to form castings can be employed in the actual production, or can be test-use glass materials and forming molds that have been processed to the same shape as those employed in actual production.

(3) Calculating the separation distance by computation and specifying the maximum separation distance portion

The separation distance can be specified by computation. For example, in an orthogonal axis system (x, y, z) with an origin in the form of the geometric center of the forming surface, denoting the separation distance between the glass material being formed and the forming surface as $D_{nk}(x, y)$, the separation distance $D_{nk}$ can be computed from equation (1) below:

$$D_{nk} = \text{(separation distance at geometric center of forming surface and glass material being formed)} + \text{SQRT}\left(\text{(radius of curvature of the glass material being formed)}^2 - (x^2 + y^2)\right) - \text{height data function of forming surface } Z_{mold}(x, y) \quad \cdots (1)$$

In equation (1), SQRT is an operator denoting the square root. The radius of curvature in equation (1) can be the radius of curvature at a position of coordinates (x, y) on the lower surface of the glass material being formed. The height data function $Z_{mold}$ (x, y) of the forming surface is a function having a variable in the form of the height of the forming surface at a position opposite the position of coordinates (x, y) on the lower surface of the glass material being formed. This height can be measured with a Talysurf (contact-type two-dimensional profile measurement device), for example. In separation distance $D_{nk}$, n denotes the calculation point number from the radial center based on the distance from the geometric center, and k denotes the calculation point number denoting the direction in the circumferential direction. They are both natural numbers (S1).
After calculating the separation distance at various positions, the sectional area in each radial direction (k) can be calculated by taking the integral ($\int D_{nk}dr$) of the separation distance $D_{nk}$ in a specific radial direction from the radial center of the glass material being formed to outer circumference (r) (S2). The portion where the separation distance peaks will be contained on the forming surface in the direction where the peak sectional area is calculated. It is thus possible to specify the direction containing the maximum separation distance portion (S3).

[Direction of conveyance of the forming mold in the temperature rising region in the first aspect]

In the first aspect of the present invention, in the temperature rising region having a temperature distribution in which the temperature rises in the direction of conveyance of the forming mold in the continuous heating furnace, the forming mold is conveyed so that a portion with the greatest separation distance among the specified separation distances is comprised in a portion on a side of the conveyance direction as divided in two by a virtual line, the virtual line running orthogonally to the conveyance direction of the forming mold and passing through a geometric center of the forming surface. Fig. 4 is a descriptive drawing of the direction of conveyance of the forming mold within the temperature rising region. In Fig. 4, the hatched portion corresponds to the portion on the conveyance direction side on the forming surface. Thus, the forming mold is conveyed in the temperature rising region so that the maximum separation distance portion lies within this portion. In Fig. 4, the virtual line has been depicted as a straight line. However, the virtual line in the first aspect is not necessarily limited to being a straight line so long as it is a line serving as a straight line orthogonal to the direction of conveyance as approximated by a straight line. Similarly, in the second aspect, the virtual line is not limited to being a completely straight line, but need only approximate a straight line. In the course of introducing the forming mold in the continuous heating furnace, the forming mold can be disposed so as to contain the maximum separation distance portion in the portion on the conveyance direction side, and when introducing the forming mold into the temperature rising region in the continuous forming mold, the forming mold can be rotated so that the maximum separation distance portion lies within the portion on the conveyance direction side. By conveying the glass material so that the portion that should undergo considerable deformation is positioned on the high temperature side in the furnace in this manner, it is possible to decrease variation in the timing of tight contact of the forming surface with the lower surface of the glass material, and thus control the deformation. When the timing of tight contact of the lower surface of the glass material with the forming surface varies greatly in the different portions across the surfaces, astigmatisms that are not necessary for eyeglass correction are sometimes generated, errors relative to design values may become asymmetric, resulting in poor wear sensation of the eyeglass. By contrast, the present invention can provide a casting mold that is capable of molding eyeglass lenses affording good wear sensation.
JIS T7315, JIS T7313, and JIS T7330 specify reference points for measurement of the dioptric power as reference points for measurement of the refractive indexes of eyeglass lenses. The reference points for the measurement of dioptric power are portions that are enclosed by circles about 8.0 to 8.5 mm in diameter, for example, on the surface on the object side or on the eyeball side of an eyeglass lens. In a progressive dioptric power lens that can be molded by the casting mold manufactured by the present invention, there are two dioptric power measurement reference points in the form of a reference point for measurement of far portion and a reference point for measurement of near portion. The intermediate region positioned between the reference point for measurement of far portion and the reference point for measurement of near portion in a progressive dioptric power lens is called the progression band. Within this band, the dioptric power varies progressively. The reference point for measurement of near portion is located at a position corresponding to the convergence of the eyeballs at a position either to the right or to the left of the main meridian, and is determined to be positioned either to the right or left of the main meridian based on the right and left partitioning of the eyeballs. When the glass material is formed into a casting mold by the hot sag forming method, the surface that was the upper surface of the glass material (the opposite surface from the surface in tight contact with the forming surface) is transferred to the eyeglass lens. The phrase "the position corresponding the reference point for measurement of dioptric power" of the forming surface of the forming mold refers to the portion coming into tight contact with the lower surface of the glass material, desirably opposing in the normal direction the portion of the upper surface of the glass material becoming the portion that is transferred to the reference point for measurement of dioptric power of the eyeglass lens on the surface of the casting mold that is manufactured. Fig. 5 shows an example of the arrangement of the "position corresponding to a reference point for measurement of far portion" and the "position corresponding to a reference point for measurement of near portion" on the forming surface of the forming mold. For example, in the embodiment shown in Fig. 5, the position corresponding to a reference point for measurement of near portion can be contained in the maximum separation distance portion. In this case, the forming mold is conveyed so that the position corresponding to a reference point for measurement of near portion is contained in the portion on the conveyance direction side in the temperature rising region.

The forming mold is desirably conveyed in the temperature rising region such that a direction running from the geometric center of the forming surface toward the maximum separation distance portion approximately overlaps the conveyance direction. Since the direction running from the geometric center of the forming surface toward the maximum separation distance portion is a direction with a sharp curve on the forming surface, it is desirable that this direction overlaps the conveyance direction in the temperature rising region for obtaining a casting mold capable of molding eyeglass lenses with good wear sensation.

The "approximately identical" or "approximately overlap" described above includes cases with the difference of equal to or less than about $\pm$ 5°. For example, in the embodiment shown in Fig. 5, the forming mold is desirably conveyed in the temperature rising region such that the direction running from the geometric center of the forming surface toward the position corresponding to a reference point for measurement of near portion (the direction of the hollow white arrow in Fig. 5) approximately overlaps the conveyance direction.

[Controlling the temperature of a continuous heating furnace in the first aspect]

A description of how to control the temperature of a continuous heating furnace in the first aspect will be given next.

The term "continuous heating furnace" means a device that has an inlet and an outlet and conducts thermal treatment by causing an item being processed to pass through the interior of a furnace with a set temperature distribution by means of a conveyor device such as a conveyor. In a continuous heating furnace, multiple heaters devised by taking into account heat emission and radiation, and a control mechanism for air circulation within the furnace, can be used to control the temperature distribution within the furnace. Normally, the heaters are disposed in the upper and lower portions of the conveyance route through the interior of the furnace. However, a region in which heat sources are disposed on both lateral surfaces can be provided in at least a portion of the furnace.

PID controls can be employed in temperature control by each sensor and heater of the continuous heating furnace. PID controls are a control method for detecting deviation between a programmed target temperature and the actual temperature and restoring (feedback) the deviation from the target temperature to 0. PID controls are a method of obtaining an output in "Proportional", "Integral", "Differential" manner when calculating from the deviation. The general equation of PID controls is given below.

[Numeral 1]

General equation of PID controls:

$$y = K_P\left(e + K_I \int e\,dt + K_D \frac{d}{dt}e\right)$$

P term:

$$K_P \cdot e_n$$

I term:

$$\int e\,dt = \lim_{\Delta t \to 0}\left(\sum_{i=0}^{n} e_i \Delta t\right) = \Delta t \Sigma e_n$$

D term:

$$\frac{d}{dt}e = \lim_{\Delta t \to 0}\left(\frac{\Delta e}{\Delta t}\right)$$

as

$$\Delta e = e_n - e_{n-1}$$

$$\frac{1}{\Delta t}(e_n - e_{n-1})$$

Thus:

$$y = Kp\left[e_n + K_I \Delta t \Sigma e_n + \frac{K_D}{\Delta t}(e_n - e_{n-1})\right]$$

In the above equations, e denotes deviation, K denotes gain (the gain with the subscript P denotes proportional gain, the gain with the subscript I denotes integral gain, and the gain with the subscript D denotes differential gain), $\Delta t$ denotes the sample time (sampling time, control frequency), and subscript n denotes the current time.
Using PID controls makes it possible to increase the precision with which the temperature is controlled within the furnace for changes in the heat quantity distribution based on the shape and quantity of inputted pieces to be processed. A nonsliding system (for example, a walking beam) can be adopted for conveyance within the electric furnace.

The continuous heating furnace need only be capable of effecting the desired temperature control, but is desirably a continuous feed-type electric furnace. For example, a continuous feed-type electric furnace can be employed in which the conveyance system is a nonsliding system, the temperature controls are PID temperature controls, the temperature measurement device is "K thermocouple 30 point made of platinum", a maximum use temperature is 800°C, the commonly employed temperature ranges from 590 to 650°C, the internal atmosphere is a dry air (free of oil and dust), the atmospheric control is in the form of an inlet air curtain, internal furnace purging, and an outlet air curtain, and the temperature control precision is ±3°C, and the cooling system is air cooling. Suction parts for suction, described further below, can be provided at 3 positions within the furnace.

In a continuous heating furnace, radiation from the heat sources within the furnace and radiating heat generated by secondary radiation from the interior of the furnace can heat the glass material to a desired temperature. The temperature of the continuous heating furnace is controlled so that a temperature rising region having a temperature distribution where the temperature rises in the conveyance direction of the forming mold is contained in the first aspect. In the temperature rising region, the glass material on the forming mold can be heated to a temperature at which the glass material is capable of deforming, desirably to a temperature equal to or higher than the glass transition temperature of the glass constituting the glass material. The temperature rising region can be a prescribed region beginning at the inlet of the continuous heating furnace.

Within the continuous heating furnace, temperature control is desirably effected so as to comprise, from the inlet (forming mold introduction inlet) side, a temperature rising region, a constant temperature maintenance region, and a cooling region. The glass material passing through the interior of a furnace having such temperature control is heated to a temperature at which it is capable of deforming in the temperature rising region, the formation of the upper surface of the glass material is progressed in the constant temperature maintenance region. Then, the glass material is cooled in the cooling region and discharged to the exterior of the furnace. It suffices to set the length of each region, the conveying speed in each region, and the like based on the total length of the conveyance route of the furnace and the heating program.

In the constant temperature maintenance region, the temperature of the glass material is desirably maintained at a temperature greater than or equal to the glass transition temperature of the glass constituting the glass material being formed. The temperature of the glass material in the constant temperature maintenance region desirably exceeds the glass transition temperature, but is desirably lower than the glass softening temperature from the perspective of forming properties. The temperature of the glass material does not necessarily have to be continuously kept constant in the constant temperature maintenance region; within this region, the temperature of the glass material can vary by about 1 to 15°C. Additionally, the glass material that has been formed in the constant temperature maintenance region is desirably gradually cooled to room temperature in the cooling region. The heating and cooling temperatures described below refer to the temperature of the upper surface of the glass material. The temperature of the upper surface of the glass material can be measured with a contact or non-contact-type temperature gauge, for example.

In the present invention, the glass material is placed on the forming surface of the forming mold prior to forming. The glass material can be positioned on the forming mold so that at least a portion of the rim of the lower surface of the glass material comes into contact with the forming surface and the center portion of the lower surface of the glass material is separated from the forming mold. The forming mold employed in the present invention has a forming surface of varying curvature within the surface as set forth above. To stably position a glass material on such a forming surface, the glass material is desirably positioned so that at least 3 points on the rim of the lower surface come into contact with the forming surface. It is further desirable for the glass material to be positioned on the forming mold so that at least, on the lower surface rim portion of the glass material, two points that are positioned on a side corresponding to the reference point for measurement of far dioptric power of the progressive dioptric power lens and one point that is positioned on a side of the reference point for measurement of near dioptric power are in contact with the forming surface. When the glass material is formed into a formed article (a casting mold or the portion thereof), the surface that was the upper surface of the glass material (the opposite surface from the surface in tight contact with the forming surface) is transferred to the eyeglass lens. The "position corresponding to the reference point for measuring the dioptric power" of the lower surface of the glass material is a portion of the lower surface of the glass material opposite the portion of the upper surface of the glass material serving as the portion that is transferred to the reference point for measuring the dioptric power of the eyeglass lens on the surface of the casting mold obtained. To stably position the glass material on the forming surface with the above three points as support points, it is desirable to form the lower surface of the glass material into a spherical shape having an average curvature that is roughly identical to the average curvature at the reference point for measuring the far dioptric power of the progressive dioptric power lens that is to be finally obtained.

Fig. 6 is a descriptive drawing of the contact between the lower surface of the glass material for manufacturing a casting mold of progressive dioptric power lenses and the forming surface of the forming mold. In Fig. 6, support points A, B, and C are contact points of the lower surface of the glass material with the forming surface. In Fig. 6, support points A and B, which lie above a line corresponding to the lens horizon (also referred to as the "horizontal reference line" or "principal longitude") running through two alignment reference points, are two points positioned on the side corresponding to reference points for measurement of the far dioptric power, and support point C, which is lower than the meridian, is a point positioned on the side corresponding to a reference point for measurement of the near dioptric power. As shown in Fig. 6, the two points positioned on the side corresponding to reference points for measurement of the far dioptric power are desirably positioned symmetrically about the line corresponding to the main meridian that runs through the reference point for measurement of the far dioptric power of the progressive dioptric power lens on the lower surface of the glass material. Further, the support point on the side corresponding to the reference point for measurement of the near dioptric power is desirably positioned on the opposite side from the reference point for measurement of the near dioptric power relative to the line corresponding to the main meridian as shown in Fig. 6. The "line corresponding to the main meridian running through the reference point for measurement of the far dioptric power" on the lower surface of the glass material refers to the portion on the lower surface of the glass material opposite the portion on the upper surface of the glass material becoming the portion that is transferred to the portion in which the main meridian of the eyeglass lens is positioned on the surface of the casting mold.

The embodiment in which, at least three points are contact (support) points is described above; however, there may be four or more contact points.

In the present invention, it is possible that a covering member is placed over the forming mold on which the glass material has been positioned and the exposed portion on the forming surface side of the forming mold upon which the glass material has been positioned is covered. Thus, the upper surface of the glass material can be prevented from contamination by foreign matter such as airborne dust and debris in the furnace as it passes through the interior of the continuous heating furnace. Details of an covering member that can be employed in the present invention are described in WO 2007/058353A1, for example.

The conveyance direction of the forming mold in the temperature rising region in the first aspect is as set forth above. During conveyance through the temperature rising region, the position of the forming mold in the right-left direction can be kept constant, or can be subjected to rotation and fluctuation at a prescribed angle and amplitude. Taking into account the fact that, with the center portion in the conveyance direction as reference, there are cases where the right-left temperature distribution is not completely uniform, rotation and fluctuation are sometimes desirable to increase the uniformity of heating in a right-left direction. In a progressive dioptric power lens, the curvature of the intermediate region (progressive zone) present between the far portion and the near portion is specified by the added dioptric power and/or the inset amount. Generally, the greater the amount of added dioptric power and/or inset, the greater the curvature becomes. In the present invention, when manufacturing a progressive dioptric power lens casting mold, it is desirable in the temperature rising region to subject the forming mold to rotation and fluctuation by an angle and amplitude determined based on the amount of added dioptric power and/or inset of the progressive dioptric power lens. The greater the amount of added dioptric power or inset, the greater the fluctuation angle and amplitude that are desirable. However, excessive displacement of the glass during softening is undesirable from the perspective of forming precision. Thus, the fluctuation angle during rotation and fluctuation, relative to the conveyance direction (0°), is desirably set within a range of ± 5 to 45°, and the amplitude is desirable set to within a range of 0.01 to 1 Hz. For example, the fluctuation angle can be ± 45° for an added dioptric power of 3D, ± 25° for an added dioptric power of 2D, and 5° for an added dioptric power of 1D.

The forming mold is conveyed so that the portion that is to be greatly deformed in the temperature rising region is positioned on the high temperature side. However, since the interior of a continuous heating furnace in which the temperature is controlled by positioning a temperature rising region, constant temperature maintenance region, and cooling region in that order will have a temperature gradient in the form of the letter "V", once one portion has been passed, the rear side in the conveyance direction reaches a high temperature. Accordingly, it is desirable in the first aspect for the forming mold to be rotated at a prescribed position so that the portion that is to be greatly deformed is positioned on the high temperature side even after the temperature rising region has been passed. Normally, the highest temperature region in the furnace is within the constant temperature maintenance region. Thus, the forming mold is desirably rotated in the constant temperature maintenance region so that the maximum separation distance portion is contained in the portion on the opposite side from the side in the conveyance direction as divided in two by a virtual line orthogonal to the conveyance direction of the forming mold and passing through the geometric center of the forming surface. For example, in the relatively initial portion of the constant temperature region, the forming mold is desirably rotated 180° once the temperature of the glass material has reached or exceeded the glass transition temperature. To position the portion that is to be greatly deformed on the high temperature side, the forming mold is desirably conveyed while maintaining the direction after the above rotation, even in the cooling region.

The continuous heating furnace employed in the present invention desirably comprises a rotating mechanism capable of 180° rotation to the right and left to permit the above-described rotation and fluctuation as well as the above-described rotation. For example, a rotating shaft can be provided in the base (support base) on which the forming mold is positioned so that the shaft is positioned in the geometric center of the forming mold. The rotating shaft can be linked to a drive motor outside the furnace to permit the transmission of a drive force and control. Effecting this control with a stepping motor and sequencer permits ready control of rotational speed, angle, rotational direction, and the like. The rotating mechanism can be disposed at any position within the furnace.

To increase the forming rate of glass material in a continuous heating furnace and enhance production efficiency, a forming mold having through-holes running from the forming surface to the opposite surface from the forming surface can be employed to apply suction through the through-holes during forming.. A forming mold having through-holes is described in detail in WO 2007/058353A1. The temperature region in which a pronounced deformation-enhancing effect can be achieved by suction is normally the constant temperature maintenance region. Thus, suction is desirably conducted in the constant temperature maintenance region in the present invention.

[Conveying the forming mold in the forming mold position control region in the second aspect]

In the second aspect of the present invention, a forming mold position control region is provided in the continuous heating furnace. The operation in the forming mold position control region will be described below.

The forming mold position control region can be provided at any position in the continuous heating furnace, and is effectively provided in a region where the softening deformation of the glass material being formed progresses greatly. From this perspective, a region in which the temperature of the upper surface of the glass material being formed reaches the glass transition temperature of the glass Tg -100°C or higher is desirably contained in the forming mold position control region, and a region where it reaches (Tg - 50°C) or higher is preferably contained in the forming mold position control region. It is of greater preference for a position at which the temperature of the upper surface of the glass material being formed peaks to be contained in the forming mold position control region in the continuous heating furnace. This is because the maximum effect of the present invention can be achieved by controlling the position of the forming mold based on the temperature gradient on the forming mold in a region containing this position since softening of the glass progresses the most at the position where the temperature peaks.

The temperature is measured at multiple measurement points on the forming surface of the forming mold at one or more spots, preferably two or more spots, in the forming mold position control region. Thus, information regarding the temperature gradient on the forming surface can be obtained. The forming mold is conveyed so that the portion in which the curvature peaks on the forming surface is contained on the maximum temperature point side (maximum temperature portion) where the temperature is the highest among these multiple measurement points, after changing the position of the forming mold as needed. This makes it possible to position the portion that should undergo the greatest deformation on the high temperature side, can reduce variation in the timing of tight contact of the lower surface of the glass material being formed with the forming surface of the forming mold, and makes it possible to control deformation. When the timing of tight contact between the lower surface of the glass material and the forming surface varies greatly at various portions across the surface, astigmatisms that are not necessary for eyeglass correction are sometimes generated, errors relative to design values may become asymmetric, resulting in poor wear senstion of the eyeglass. By contrast, the present invention can reduce the variation in the timing of tight contact, providing a casting mold that is capable of molding eyeglass lenses affording good wear sensation.

The high temperature portion is determined as described below.

First, a forming mold is conveyed into a furnace while the temperature measuring apparatus is disposed at a position in contact with the forming surface or in the vicinity of the forming surface. The temperature measuring apparatus is desirably a thermocouple. Specifically, K thermocouple 30 point made of platinum or the like can be employed.

The following are examples of embodiments of positioning the temperature measuring apparatus:

(A) an embodiment in which one temperature measuring apparatus is disposed in a position in contact with the forming surface or near the forming surface, the forming mold is rotated within the forming mold position control region, and the temperature of each measurement point is sequentially measured by the temperature measuring apparatus;

(B) an embodiment in which two or more temperature measuring apparatuses are disposed in a position in contact with the forming surface or near the forming surface.

In both of the above embodiments, the temperature measuring apparatus is desirably disposed in a position that is near the glass material but where it will not interfere with the glass material being formed. Specifically, the perimeter of the forming mold is desirable as a position for the temperature measuring apparatus, and the edge of the perimeter is preferred. However, a through-hole can be made in the interior of the forming mold somewhere other than in the geometric center of the forming surface and the temperature measuring apparatus can be disposed therein. Disposing the temperature measuring apparatus in this manner permits direct or indirect measurement of the temperature at measurement points.

Since only one temperature measuring apparatus is employed in above-described embodiment (A), the forming mold is rotated to measure the temperature at a plurality (two or more) of measurement points. The rotation can be conducted about the geometric center as axis. For example, the temperature at each of the measurement points can be sequentially measured while rotating the forming mold so that the temperature measuring apparatus contacts each measurement point or is positioned in the vicinity of each measurement point.

Two or more temperature measuring apparatuses are employed in embodiment (B). The measuring apparatuses can be disposed to measure the temperature at individual measurement points. In that case, rotation of the forming mold is not necessary for temperature measurement. However, in embodiment (B), it is also possible not to dispose a temperature measuring apparatus at each measurement point, but to rotate the forming mold to measure the temperature at each measurement point in the same manner as in embodiment (A).

At least two measurement points at which the temperature is measured are established to obtain information on the temperature distribution within the surface. From the perspectives of ease of positioning the temperature measuring apparatus and reducing the impact on forming, the measurement points are desirably provided at the edge of the perimeter of the forming surface. From the perspective of obtaining precise information on the temperature distribution within the surface, measurement points are desirably established along the entire circumference of the forming surface, and measurement points are preferably established at intervals of equal angles along the entire circumference of the forming surface. For example, the temperature can be measured at 360 points at a 1° pitch. Alternatively, in order to dispose the portion that should undergo the greatest deformation in the high temperature portion on the forming surface, it is possible to establish the measurement points only in the portion on the conveyance direction side as divided in two by a virtual line (virtual line C) running orthogonally to the conveyance direction and passing through the geometric center of the forming surface, in the temperature rising region described below. This is because it is assumed that, in the temperature rising region, the above portion normally contains the high temperature portion. Further, in the temperature rising region, it is possible to provide temperature measurement points concentrated in a region with a window angle of about 45 to 180° (taking the direction of conveyance as 0°, a region of about $\pm$ 22.5° to about $\pm$ 90°) in the direction of conveyance through the furnace where the probability of a high temperature region is high. Additionally, there is a high probability of the presence of a high temperature portion in the direction opposite the direction of conveyance in the cooling region described further below. In this case, it is desirable to provide concentrated temperature measurement points in the opposite direction from the direction of conveyance.

The point of maximum temperature (maximum temperature point) among the various measurement points is determined by the above measurement. Next, the method of determining the portion containing the maximum temperature point as the high temperature portion will be described based on Fig. 13.

First, a virtual line (virtual line A) running through the geometric center and the maximum temperature point is specified. Next, a virtual line (virtual line B) that is orthogonal to virtual line A and passes through the geometric center is specified. As indicated in Fig. 13, virtual line B divides the forming surface in two. Of the two portions thus divided, the portion containing the maximum temperature point (the hatched portion in Fig. 3) is heated to a higher temperature than the other portion. Thus, this portion is determined as the high temperature portion.

Next, the forming mold is conveyed so that the portion of maximum curvature on the forming surface, that is, the portion that should undergo the greatest deformation to achieve tight contact with the forming surface of the forming mold, is contained in the high temperature portion determined by the above method. When the portion of maximum curvature on the forming surface is already contained in the high temperature portion, it suffices to continue conveying the forming mold in the same manner. When it is not contained therein, the forming mold is rotated so that the portion of maximum curvature is contained in the maximum temperature portion. In this case, the rotation is desirably conducted about the geometric center as axis.

The interior of a continuous heating furnace is normally divided into multiple zones and temperature control is conducted within each of the zones. The above forming mold position control region is desirably provided in at least the temperature rising region, described further below, but can also be provided in each zone. It suffices to measure the temperature in at least one spot within a continuous heating furnace, but such measurement can be conducted at two or more spots. When individual zones are separated by partitions such as shutters, major variation in the temperature distribution of each zone is to be anticipated and the temperature distribution in the vicinity of the partitions will tend to be nonuniform. Thus, the temperature is measured in front of and behind the partitions, and, as needed, the forming mold is desirably rotated to change its position.

The term "portion of maximum curvature" refers to the portion corresponding to the portion for molding the near portion on the forming surface of the forming mold. More specifically, it can be the position corresponding to a reference point for measurement of near portion on the forming surface of the forming mold. The details of the reference points for measuring the refractive index of an eyeglass lens are as set forth above.

As stated above, the forming mold is conveyed so that the portion of maximum curvature on the forming surface is contained in the high temperature portion in the forming mold position control region in the present invention. The direction of conveyance of the forming mold does not necessarily have to align with virtual line A. However, it is desirable to convey the forming mold so that the direction running from the geometric center toward the maximum temperature point on the virtual line A (also referred to as the "high temperature direction" hereinafter) approximately overlaps the direction (also referred to as the "maximum average curvature direction" hereinafter) on which an average curvature from the geometric center to a perimeter portion of the forming surface of the forming mold peaks. The direction on which an average curvature from the geometric center to a perimeter portion of the forming surface of the forming mold peaks is, for example, the direction indicated by the hollow white arrow on the forming surface of the embodiment shown in Fig. 5, that is, the direction running from the geometric center toward the position corresponding to the reference point for measurement of near portion. This direction has the sharpest curve on the forming surface. Thus, approximately overlapping this direction with the high temperature direction in the temperature rising region is desirable for obtaining a casting mold capable of molding eyeglass lenses affording good wear sensation. The terms "approximately identical" and "approximately overlapping" above include cases that differ by about $\pm$ 5° or less.

Methods of determining the direction of maximum average curvature include: first, the method of specification by calculating the direction of maximum curvature based on measurement of the three-dimensional shape of the forming surface of the forming mode (Method 1), and second, the method of specification based on the prescription values of an eyeglass lens in the form of the axis of astigmatism, the reference point for measurement of near portion, and the reference point for measurement of far portion (Method 2). In Method 2, it suffices to determine the direction of conveyance so that the position corresponding to the reference point for measurement of near portion is disposed on the high temperature portion side on virtual line A using the axis of astigmatism as a reference based on the design values of the forming surface of the forming mold.

Method 1 will be described below.

In Method 1, the approximate radius of curvature of the cross-section of a lens in a given direction is calculated from the coordinates of three or more points on a straight line passing through the geometric center of the forming surface of a forming mold. This calculation method is used to calculate the radii of curvature in all directions and the minimal radius of curvature and its direction are specified based on the results. An approximate radius of curvature is calculated either by solving simultaneous equations for three points, or by calculating an approximate radius of curvature by the method of least squares from the coordinates of three or more points.

The surface shape of the forming surface of a forming mold can be represented by means of the numeric values of the heights of the individual squares of the square-shaped rows by dividing the height of the forming surface horizontally and vertically. The category of shape is that of a free curved surface, which includes progressive surface shapes. The B-spline function denoted by equation 1 below can be used to represent a free curved surface to represent the values of coordinates at any position.

[Numeral 2]

$$f(x, y) = \sum_{i=1}^{h+m} \sum_{j=1}^{k+m} c_{ij} N_{mi}(x) N_{mj}(y) \quad \text{(Equation 1)}$$

In equation 1, m denotes the order (m-1: degree) of the spline function; h and k denote numbers of nodal points - 2m of the spline function; cij denote coefficients; and Nmi(x) and Nmj(y) denote B-splines of the $m^{th}$ order. For details relating to spline functions, the reference "Series: New Applications of Mathematics 20, Spline Functions and Their Applications," by Kouzo ICHIDA and Fujiichi YOSHIMOTO, published by Kyoiku Shuppan, which is expressly incorporated herein by reference in its entirety, can be consulted.

Calculation of the radius of curvature will be described next. A specific example of the method of calculation based on simultaneous equations will be given first.

As shown in Fig. 14, the coordinates of three points AOB lying on a straight line that passes through the geometric center of the forming surface of a forming mold and connects the two edges are employed to calculate the approximate radius of curvature of the cross-section from simultaneous equations of circles. When the three points employed in the calculation are denoted as A(X1, Y1), O(X2, Y2), and B(X3, Y3), as shown in Fig. 5, the value of the coordinates of the ZX cross-section become A(X1, Z1), O(X2, Z2), and B(X3, Z3). To obtain the equation of a circle passing through the three points AOB, the following simultaneous equations are solved. However, there is a necessary condition that the three points not lie on a straight line in the ZX cross-section. Denoting the values of the X and Z coordinates of the center of the circle as a and b, respectively, and the radius of the circle as r gives simultaneous equations in the form of equation 2 below.

[Numeral 3]

$$\begin{aligned} (X1-a)^2 + (Z1-b)^2 &= r^2 \\ (X2-a)^2 + (Z2-b)^2 &= r^2 \quad \text{(Equation 2)} \\ (X3-a)^2 + (Z3-b)^2 &= r^2 \end{aligned}$$

To determine the minimal radius of curvature and its direction, as shown in Fig. 15, an approximate radius of curvature is calculated for the cross-sections in directions U1,U2,... Un at a pitch of angle θ. Angle θ can be set to from 0.1 to 1°, for example.

By contrast, as shown in Fig. 16, when the three points employed to calculate the direction of angle α are denoted as C(X1, Y1), O(X2, Y2), and D(X3, Y3), as shown in Fig. 17, the value of the coordinates of the ZW cross-section are given by C(W1, Z1), O(W2, Z2), and B(W3, Z3). The equation of a circle passing through the three points COD can be obtained by solving the simultaneous equations of equation 3 below. However, there is a condition that the three points not lie on a straight line in the ZW cross-section.

[Numeral 4]

$$\begin{aligned}(W1-a)^2+(Z1-b)^2&=r^2\\(W2-a)^2+(Z2-b)^2&=r^2\\(W3-a)^2+(Z3-b)^2&=r^2\end{aligned}\quad\text{(Equation 3)}$$

In equations 2 and 3 above, a and b denote the values of coordinates W and Z, respectively, of the center of the circle; r denotes the radius of the circle; and the coordinate values W1, W2, and W3 denote identical values in all directions. Accordingly, Z1, Z2, and Z3 become as shown in equation 4 based on the B-spline function.

[Numeral 5]

$$\begin{aligned}Z1&=f(X1,Y1)\\Z2&=f(X2,Y2)\\Z3&=f(X3,Y3)\end{aligned}\quad\text{(Equation 4)}$$

As an example, Table 1 shows examples of the calculation of radii of curvature in a total of 18 directions at an individual axis pitch of 10 degrees in a progressive surface using the above-described method. In Table 1, P1, P2, and P3 denote coordinate values on the axes, and the axis direction denotes the "angle (deg) formed with the X-axis direction by the cross-section being calculated." From Table 1, it is possible to specify that the direction of 60 degrees is the maximum average curvature direction (the direction of the smallest radius of curvature).

[Table 1]

| Angle (deg) formed with the X-axis direction by the cross-section being calculated | Coordinate value at P1 point (mm) | | | Coordinate value at P2 point (mm) | | | Coordinate value at P3 point (mm) | | | Radius of curvature at Pn point (mm) | Curvature at Pn point (1/mm) |
|---|---|---|---|---|---|---|---|---|---|---|---|
| | X | Y | Z | X | Y | Z | X | Y | Z | | |
| 0 | 35 | 0 | 7.36 | 0 | 0 | 0 | -35 | 0 | 6.78 | 90.18 | 1.109E-02 |
| 10 | 34.47 | 6.08 | 7.4 | 0 | 0 | 0 | -34.5 | -6.08 | 6.94 | 88.98 | 1.124E-02 |
| 20 | 32.89 | 11.97 | 7.47 | 0 | 0 | 0 | -32.9 | -12 | 7.16 | 87.38 | 1.144E-02 |
| 30 | 30.31 | 17.5 | 7.54 | 0 | 0 | 0 | -30.3 | -17.5 | 7.4 | 85.74 | 1.166E-02 |
| 40 | 26.81 | 22.5 | 7.62 | 0 | 0 | 0 | -26.8 | -22.5 | 7.58 | 84.37 | 1.185E-02 |
| 50 | 22.5 | 26.81 | 7.71 | 0 | 0 | 0 | -22.5 | -26.8 | 7.68 | 83.48 | 1.198E-02 |
| 60 | 17.5 | 30.31 | 7.79 | 0 | 0 | 0 | -17.5 | -30.3 | 7.66 | 83.15 | 1.203E-02 |
| 70 | 11.97 | 32.89 | 7.85 | 0 | 0 | 0 | -12 | -32.9 | 7.57 | 83.3 | 1.200E-02 |
| 80 | 6.08 | 34.47 | 7.88 | 0 | 0 | 0 | -6.08 | -34.5 | 7.43 | 83.82 | 1.193E-02 |
| 90 | 0 | 35 | 7.87 | 0 | 0 | 0 | 0 | -35 | 7.3 | 84.56 | 1.183E-02 |
| 100 | -6.08 | 34.47 | 7.81 | 0 | 0 | 0 | 6.08 | -34.5 | 7.2 | 85.35 | 1.172E-02 |
| 110 | -12 | 32.89 | 7.72 | 0 | 0 | 0 | 11.97 | -32.9 | 7.16 | 86.05 | 1.162E-02 |
| 120 | -17.5 | 30.31 | 7.58 | 0 | 0 | 0 | 17.5 | -30.3 | 7.19 | 86.65 | 1.154E-02 |
| 130 | -22.5 | 26.81 | 7.39 | 0 | 0 | 0 | 22.5 | -26.8 | 7.25 | 87.29 | 1.146E-02 |
| 140 | -26.8 | 22.5 | 7.17 | 0 | 0 | 0 | 26.81 | -22.5 | 7.31 | 88.23 | 1.133E-02 |
| 150 | -30.3 | 17.5 | 6.94 | 0 | 0 | 0 | 30.31 | -17.5 | 7.33 | 89.39 | 1.119E-02 |
| 160 | -32.9 | 11.97 | 6.78 | 0 | 0 | 0 | 32.89 | -12 | 7.33 | 90.34 | 1.107E-02 |
| 170 | -34.5 | 6.08 | 6.72 | 0 | 0 | 0 | 34.47 | -6.08 | 7.34 | 90.66 | 1.103E-02 |

An example of the method of calculating coordinate values from three or more points will be described next. As shown in Fig. 18, the coordinate values of three or more points lying on a straight line that passes through the geometric center of the forming surface of a forming mold and connects the two edges are employed to calculate the approximate radius of curvature in the cross-section by the method of least squares in the equation of a circle. In the manner of points A to I in Fig. 18, when the coordinate points employed in the calculation in the form of n points, with n being 3 or greater, are denoted as (X1, Y1), (X2, Y2), ... (Xn, Yn), as shown in Fig. 17, the coordinate values of cross-section ZX are given by (X1, Z1), (X2, Z2),...(Xn, Zn). The method of least squares is employed to obtain the equation of the circle that is the closest to these n coordinate values, and the simultaneous equations of equation 5 below are solved. There is a condition that not all of these points lie on a straight line within cross-section ZX. In equation 5, a and b denote the values of coordinate values X and Z, respectively, of the center of the circle, and r denotes the radius of

the circle.

[Numeral 6]

$$S = \sum_{i=1}^{n} \left\{ (Xi - a)^2 + (Zi - b)^2 - r^2 \right\}^2 \quad \text{(Equation 5)}$$

The equation of the circle constituting the best approximation is obtained when S in equation 5 assumes its lowest value. Accordingly, to obtain the values of a, b, and r that yield the lowest S, differentiation is conducted with a, b, and r, 0 is substituted, and a solution is obtained for these values, as shown in equation 6, below.

[Numeral 7]

$$\frac{\partial S}{\partial a} = -2 \cdot \sum_{i=1}^{n} \left[ \left\{ (Xi - a)^2 + (Zi - b)^2 - r^2 \right\} (Xi - a) \right] = 0$$
$$\frac{\partial S}{\partial b} = -2 \cdot \sum_{i=1}^{n} \left[ \left\{ (Xi - a)^2 + (Zi - b)^2 - r^2 \right\} (Zi - b) \right] = 0 \quad \text{(Equation 6)}$$
$$\frac{\partial S}{\partial a} = -2 \cdot r \cdot \sum_{i=1}^{n} \left\{ (Xi - a)^2 + (Zi - b)^2 - r^2 \right\} = 0$$

To determine the minimal radius of curvature and its direction, as shown in Fig. 15, an approximate radius of curvature is calculated for the cross-sections in directions U1, U2,... Un at a pitch of angle $\theta$. Angle $\theta$ can be set to 1°, for example.

As shown in Fig. 19, when the n coordinate points used to calculate the direction of angle $\alpha$ are denoted as (X1, Y1), (X2, Y2),... (Xn, Yn), as shown in Fig. 20, the value of the coordinates of cross-section ZW are given by (W1, Z1), (W2, Z2), ... (Wn, Zn). The equation of the circle the closest to these n coordinate values can be obtained by solving the following simultaneous equations by the least squares method. However, there is a condition that not all of the points lie on a straight line in the ZW cross-section. Equation 7 below is obtained by denoting the coordinate values W and Z of the center of the circle as a and b, respectively, and denoting the radius of the circle as r.

[Numeral 8]

$$S = \sum_{i=1}^{n} \left\{ (Wi - a)^2 + (Zi - b)^2 - r^2 \right\}^2 \quad \text{(Equation 7)}$$

The equation of the circle constituting the best approximation is obtained when S assumes its lowest value. Accordingly, to obtain the values of a, b, and r yielding the lowest S, differentiation is conducted with a, b, and r, 0 is substituted, and a, b, and r are calculated from the following simultaneous equations (equation 8).

[Numeral 9]

$$\frac{\partial S}{\partial a} = -2 \cdot \sum_{i=1}^{n} \left[ \left\{ (Wi-a)^2 + (Zi-b)^2 - r^2 \right\} (Wi-a) \right] = 0$$

$$\frac{\partial S}{\partial b} = -2 \cdot \sum_{i=1}^{n} \left[ \left\{ (Wi-a)^2 + (Zi-b)^2 - r^2 \right\} (Zi-b) \right] = 0 \qquad \text{(Equation 8)}$$

$$\frac{\partial S}{\partial a} = -2 \cdot r \cdot \sum_{i=1}^{n} \left\{ (Wi-a)^2 + (Zi-b)^2 - r^2 \right\} = 0$$

In this context, the values of coordinates W1, W2, and W3 are made identical in all directions. The various Z values (Z1, Z2, Z3) are obtained from the B-spline function (equation 9 below).

[Numeral 10]

$$Z1 = f(X1, Y1)$$
$$Z2 = f(X2, Y2) \qquad \text{(Equation 9)}$$
$$Z3 = f(X3, Y3)$$

In the same manner as the calculation performed for three points based on the above method, the maximum average curvature direction can be specified using 4 or more points. Alternatively, 3 or more coordinate values -- for example, four coordinate values-- can be positioned on a line segment in the form of a straight line running between the geometric center of the forming surface of a forming mold and an edge, the approximate radius of curvature in the cross-section thereof can be calculated to specify the maximum radius of curvature.

[Temperature control of the continuous heating furnace in the second aspect]

The details of the continuous heating furnace that can be employed in the second aspect and conveyance of the forming mold within the furnace are as set forth for the first aspect. In the second aspect, as in the first aspect, the temperature is desirably controlled so that a temperature rising region having a temperature distribution in which the temperature rises in the direction of conveyance of the forming mold is contained in the continuous heating furnace. The glass material being formed can be heated within the temperature rising region to a temperature permitting deformation of the glass material on the forming mold, desirably so that the temperature of the upper surface of the glass material being formed reaches the glass transition temperature Tg - 100°C or greater of the glass constituting the glass material, preferably (Tg - 50°C) or higher, and more preferably, the glass transition temperature or higher. The temperature rising region can be a prescribed region beginning at the inlet of the continuous heating furnace. In the second aspect, the forming mold position control region is desirably provided in at least the temperature rising region because this region is where softening deformation of the forming mold progresses the most.

In the second aspect, as in the first aspect, it is desirable to control the temperature so that a temperature rising region from the inlet side (forming mold introduction inlet), constant temperature maintenance region, and cooling region are contained within the continuous heating furnace.

In the second aspect, the conveyance direction of the forming mold is established as set forth above in the forming mold position control region. A forming mold position control region is desirably provided in at least the temperature rising region, and is preferably provided in the constant temperature maintenance region and the cooling region. That is, the steps of temperature measurement -> high temperature portion specification -> forming mold rotation are desirably conducted at multiple spots within the furnace to suitably change the direction of the forming mold and convey the forming mold within the furnace. More specifically, steps S1 to S5 are desirably conducted in the manufacturing method of the second aspect of the present invention:

(S1) Specifying a position corresponding to a reference point for measurement of near portion on the forming mold;
(S2) Measuring the temperature on the forming surface of the forming mold;

(S3) Specifying a high temperature portion and high temperature direction on the forming surface;
(S4) Rotating the forming mold to align the direction from the geometric center of the forming mold toward a position corresponding to the reference point for measurement of near portion (maximum average curvature direction) with the high temperature direction; and
(S5) Repeating S2 to S4 when the forming mold reaches the next temperature measurement position.

Specific embodiments of the manufacturing method of the present invention will be described next.
Temperature control in the continuous heating furnace is conducted in single cycles of prescribed duration. An example of temperature control in which one cycle lasts 17 hours will be described below. However, the present invention is not limited to the embodiment described below.
Furnace temperature control can be conducted in seven steps. The first step (A) is a preheating step. The second step (B) is a rapid heating and temperature-rising step. The third step (C) is a slow heating and temperature-rising step. The fourth step (D) is a step in which a constant temperature is maintained. The fifth step (E) is a slow cooling step. The sixth step (F) is a rapid cooling step. And the seventh step (G) is a natural cooling step.
In the preheating step (A), which is the first step, a constant temperature close to room temperature is maintained for 90 minutes. This is done in order to establish a uniform temperature distribution throughout the glass material and to facilitate reproducibility of the thermal distribution of the glass material by temperature control during processing by heat-softening. The temperature that is maintained can be any temperature of about room temperature (about 20 to 30°C).
In rapid heating step (B), which is the second step, heating is conducted for about 90 minutes by increasing the temperature from room temperature (for example, 25°C) to a temperature 50°C below (also called "T1" hereinafter) the glass transition temperature (also referred to as "Tg" hereinafter) at a rate of about 4°C/min, for example. Then, in slow heating step (C), which is the third step, heating is conducted for 120 minutes by increasing the temperature from temperature T1 to a temperature about 50°C below the glass softening point (also called "T2" hereinafter) at a rate of 2°C/min, for example. In constant temperature maintenance step (D), which is the fourth step, temperature T2 is maintained for about 60 minutes.
The glass material that has been heated to temperature T2 is heated for 30 minutes in the constant temperature maintaining step. Heating is then conducted for another 30 minutes at temperature T2. When a forming mold having through-holes as described above is employed, during these latter 30 minutes, suction processing can be conducted through the through-holes in the forming mold. The suction processing can be conducted by operating a suction pump positioned outside the electric furnace. The negative pressure is generated by the suction with a suction pump, applying suction to the glass material positioned in the forming mold through the through-holes of the forming mold. The generation of a suction of 80 to 150 mmHg ($\fallingdotseq 1.0 \times 10^4$ to $1.6 \times 10^4$ Pa) through a suction inlet of the prescribed heat-resistant base mold begins 30 minutes after the start of heating at temperature T2 in the electric furnace.
Once the suction has been completed, heat-softening deformation of the glass material onto the forming mold is concluded. Once deformation by heat- softening has been concluded, cooling is conducted. In slow cooling step (E), the fifth step, cooling is conducted, for example, for about 300 minutes at a rate of 1°C/min to a temperature 100°C below Tg (also called "T3" hereinafter) to fix the change in shape caused by deformation. The slow cooling step also comprises annealing elements to remove glass distortion.
Next, in rapid cooling step (F), the sixth step, cooling is conducted to about 200°C at a rate of about 1.5°C/min. There is a risk of the glass that has been processed by softening and the forming mold being damaged by their own thermal contraction and differences between each other in coefficients of thermal expansion to temperature change. Accordingly, the temperature change rate is preferably small to the extent that damage does not occur.
Further, when the temperature drops to equal to or lower than 200°C, natural cooling step (G), the seventh step, is conducted. In natural cooling step (G), natural cooling is conducted from 200°C to room temperature.
Once softening processing has been completed, the lower surface of the glass material and the forming surface of the mold fit precisely together. The upper surface of the glass material deforms based on the shape deformation of the lower surface of the glass material, forming the desired optical surface. Once the glass optical surface has been formed in the above steps, the glass material is removed from the forming mold, yielding a formed article. The formed article thus obtained can be employed as a casting mold for lenses, such as a progressive dioptric power lens casting mold, preferably an eyeglass lens casting mold. Alternatively, a portion such as the rim portion can be removed and then the formed article can be employed as a lens casting mold.
The present invention further relates to a method of manufacturing an eyeglass lens comprising manufacturing a lens casting mold by the above-described method and manufacturing an eyeglass lens by cast polymerization with the lens casting mold that has been manufactured or some part thereof as the casting mold. According to the method of manufacturing a lens casting mold of the present invention described above, by disposing a portion that should undergo great deformation on a high temperature side, it is possible to control deformation due to heat softening by utilizing the nonuniformity of heating in a continuous heating furnace, and thus to manufacture a lens casting mold with few errors relative to design values and in which the symmetry of the error level is maintained. By using this lens casting mold, it is possible to obtain eyeglass lenses affording good wear sensation, and more specifically, progressive dioptric power lenses. The above cast polymerization can be conducted by known methods.

EXAMPLES

The present invention will be described below based on Examples. However, the present invention is not limited to the embodiments shown in Examples.

1. Determining the temperature distribution within a continuous heating furnace

The temperature distribution of a glass material in a continuous heating furnace was evaluated under the following conditions.
An electric furnace was employed that had 2 horizontal rows and 54 vertical takts on its interior, permitting the positioning of three ceramic molds and preforms (glass material) each on plates of heat-resistant stainless steel in each of the two horizontal rows. The temperature distribution was measured in the four directions at a maximum and in the center of the surface of each preform. Measurement was conducted with 19 sensors, which was thought to be the largest number of sensors that could be used without compromising the conveyor system. Fig. 7 shows the sensor layout in the horizontal direction. The temperature was measured in the center and at positions 10 mm inside the perimeter along the outer periphery of the preform. The smallest number was positioned to the outlet side of the electric furnace. In Fig. 7, sensor number 16, not shown, was used to measure the room temperature.
An electric furnace equipped in this fashion with sensors was employed during normal mass production charging. Dummy ceramic molds were positioned in front of and behind the sensors. The interior of the furnace was controlled to achieve the temperature distribution described in the specific embodiment above, and the electric furnace was operated. Fig. 8 shows the layout within the electric furnace.

Fig. 9 shows the results of temperature deviation measurement (center portion) by sensor nos. 11, 12, 13, and 14. As shown in Fig. 9, the temperature at the center of each of the six horizontal preforms was kept to ± 5°C in the range of equal to or higher than 600°C. In the range of temperature increase from the glass transition temperature Tg (485°C) to the maximum temperature, a difference of about ± 15°C was observed. For example, along the axis of the direction of advance within the electric furnace, the side on the direction of advance was 15°C higher from Tg to the maximum temperature. In the vicinity of the maximum temperature, the side of the direction of advance was observed to be 5°C lower on average.

Temperatures were measured in all six horizontally positioned preforms; Fig. 10 shows the results of measuring the temperature distribution in the direction of advance and a direction perpendicular to the direction of advance on the preforms within an electric furnace. As shown in Fig. 10, the temperature differential to the front and to the rear of the direction of advance on the preforms was greatest in the heating and temperature rising step, and the temperature differential decreased at a maximum temperature of Tg or greater in the final stage of the heating and temperature rising step. In the initial period of the constant temperature maintenance step (recorded as "constant temperature maintenance step" in Figs. 9 and 10), the temperature differential was 0, and in reversal, the temperature on the advance direction side became lower. From the subsequent slow cooling step (recorded as the "slow cooling step" in Figs. 9 and 10) through the rapid cooling step (recorded as the "rapid cooling step" in Figs. 9 and 10), this temperature differential was maintained. Additionally, based on sensor numbers 12 and 14, which moved straight forward along the direction of advance as shown in Fig. 9, there was a portion (for example, 700 seconds and beyond) in which the temperature in the direction of straight forward motion along the direction of advance was higher than in the direction originally presumed to be the direction of maximum temperature (the direction of advance in the temperature rising step and the direction opposite the direction of advance in the cooling step) in the continuous electric furnace. Based on these results, it can be understood that temperature control in the furnace and the temperature distribution on the forming surface do not necessarily match. By contrast, the second aspect of the present invention can ensure that the maximum curvature portion of the forming mold will be disposed on the high temperature side regardless of where the high temperature side lies, by means of position control and temperature measurement on the forming surface.

2. Example and Comparative Example relating to the first aspect

[Example 1]

Two types of glass preforms (glass materials 1 and 2) of equal thickness in the normal direction, both surfaces of which were spherical, were disposed on the forming surfaces of forming molds having forming surfaces corresponding to progressive dioptric power lenses having far portion and near portion. The forming molds were visually observed in a lateral direction and the portion that was determined to have the greatest separation distance was specified as the maximum separation distance portion.
Next, the forming molds with the preforms positioned on them were introduced into an electric furnace with the direction running from the geometric center of the forming mold toward the maximum separation distance portion overlapped the conveyance direction and conveyed through the furnace. The temperature within the electric furnace was controlled in the same manner as in the above-described specific embodiment. In the constant temperature maintenance step, suction was applied from the forming mold and the forming mold was reversed 180°C when the temperature of the preform exceeded the Tg. The shape error (measured value - design value) relative to the design values of the upper surface shape of the glass preforms that were discharged to the exterior of the furnace was measured with a Talysurf. The results are given in Fig. 11.

[Comparative Example 1]

With the exception that the orientation of the forming mold during introduction into the electric furnace was changed 180°, the same two types of glass preforms as in Example 1 were formed by heating. The shape error relative to the design values of the upper surface shape of the glass preforms discharged to the exterior of the furnace was measured in the same manner as in Example 1. The results are given in Fig. 12.
As shown in Fig. 11, the error level was 0.03 D or lower, making it possible to reduce the absolute value of the error level in Example 1. Further, symmetry of error distribution was also maintained in Example. Maintaining symmetry in the error level in lens manufacturing makes it possible to suppress the generation of astigmatisms that are unnecessary in eyeglass correction. As the same time, it is also possible to reduce the feeling of discomfort when wearing an eyeglass lens due to asymmetry of the error level.
By contrast, no symmetry of error was seen and the error level was high in Comparative Example 1 as shown in Fig. 12.

3. Example and Comparative Example relating to the second aspect

[Example 2]

In order to obtain a double-sided progressive dioptric power lens containing progressive elements on both surfaces, a glass preform of equal thickness in the normal direction (glass material 3), both surfaces of which were spherical, was placed on the forming surface of a forming mold having a forming surface corresponding to the above progressive dioptric power lens.
In order to obtain a progressive dioptric power lens having a progressive surface on either the concave or convex surface thereof, a glass preform of equal thickness in the normal direction (glass material 4), both surfaces of which were spherical, was placed on the forming surface of a forming mold having a forming surface corresponding to the above progressive dioptric power lens.
For each of the forming molds, the direction on which an average curvature from the geometric center to a perimeter portion of the forming surface peaks (maximum average curvature direction) was specified by the above-described method before positioning the glass material. On the forming surfaces of the forming molds for obtaining the above two types of lenses, the direction from the geometric center toward the position corresponding to the reference point for measurement of near portion overlapped the maximum average curvature direction.
One thermocouple (K thermocouple 30 point made of platinum) was disposed in each forming mold to measure the temperature on the forming surface. The forming molds were conveyed through an electric furnace and heat treatment was conducted. The temperature was controlled in the electric furnace in the same manner as in the above specific embodiment. The various steps of (A) a preheating step, (B) a rapid temperature-rising step, (C) a low-temperature heating and temperature-rising step, (D) a low-temperature maintenance step, (E) a low-temperature cooling step, (F) a rapid cooling step, and (G) a natural cooling step were separated by partitions. In step (B) and each of the subsequent steps, the forming mold was brought into contact with the thermocouple to measure the temperature by rotating the forming mold at a pitch of 1°, the temperature was measured once at a total of 360 points in each zone separated by a partition, and the high temperature portion and high temperature direction were specified. When the high temperature direction that was specified did not overlap the maximum average curvature direction, the forming mold was rotated so that they overlapped each other and conveyance of the forming mold was continued (as a result, the forming mold was conveyed with the maximum curvature portion on the forming mold contained in the high temperature portion). The conveyance direction was kept constant through the temperature measurement position in the next zone.
Subsequently, measurement with a Talysurf of the shape error (design value-design value) relative to the design value of the upper surface shape of the glass material that was discharged to the exterior of the furnace revealed that the error level had been kept to 0.03 D or lower, making it possible to reduce the absolute value of the error level, in the same manner as in Example 1. Further, symmetry of error distribution was also maintained in the same manner as in Example 1. Maintaining symmetry in the error level in lens manufacturing makes it possible to suppress the generation of astigmatisms that are unnecessary in eyeglass correction. As the same time, it is also possible to reduce the feeling of discomfort when wearing an eyeglass lens due to asymmetry of the error level.

Example 2 is an embodiment in which a forming mold was employed, in which the direction from the geometric center toward a position corresponding to the reference point for measurement of near portion overlapped the maximum average curvature direction in the forming surface.
Example of another embodiment will be given below.

[Example 3]

In order to obtain a double-sided progressive dioptric power lens comprising a progressive element on both surfaces with near-viewing dioptric power elements distributed on both a concave surface and a convex surface, a glass preform of equal thickness in the normal direction (glass material 5), both surfaces of which were spherical, was placed on the forming surface of a forming mold having a forming surface corresponding to the above progressive dioptric power lens.
In order to obtain a monofocal lens having a progressive element, a glass preform of equal thickness in the normal direction (glass material 6), both surfaces of which were spherical, was placed on the forming surface of a forming mold having a forming surface corresponding to the above monofocal lens.
For each forming mold, the direction on which an average curvature from the geometric center to a perimeter portion of the forming surface peaks (maximum average curvature direction) was specified by the above-described method before placing the glass material. On the forming surface of the forming mold employed in Example 3, the maximum average curvature direction did not overlap the direction running from the geometric center toward the position corresponding to the reference point for measurement of near portion (the portion of maximum curvature on the forming surface).
Processing was conducted in the same manner as in Example 2 with the exceptions that the forming mold was suitably rotated in the furnace so that position corresponding to the reference point for measurement of near portion on the forming surface was contained in the high temperature portion and the specified high temperature direction overlapped the maximum average curvature direction, after which conveyance of the forming mold was continued. Glass materials 5 and 6 were both found to exhibit error levels of 0.03 D or lower and to have maintained symmetry of error distribution in the same manner as in Examples 1 and 2.

[Comparative Example 2]

Two types of glass preforms were formed by heating by the same method as in Example 2 with the exception that the orientation of the forming mold was not changed in the electric furnace. Measurement of the shape error relative to the design value of the upper surface shape of the glass material that was discharged to the exterior of the furnace in the same manner as in Example 2 revealed no symmetry of error and a substantial error level in the same manner as in Comparative Example 1.

4. Example and Comparative Example of progressive dioptric power lens manufacturing

[Example 4]

Double-sided progressive dioptric power lenses were obtained by cast polymerization using the casting molds obtained in Examples 1 to 3. The outer diameter of the lenses obtained was 75 φ and the surface average base curve was 4 D. The lenses obtained were held to the lens holder in a lens meter and the astigmatism in the optical center or the dioptric power measurement reference point was measured as 0.01 D in all cases. The lens meter employed in the present Example was of the transmission type, but it was also possible to calculate the astigmatism based on analysis of the surface dioptric power from the results of measurement by a reflecting type surface dioptric power device or shape measuring device.

[Comparative Example 3]

With the exception that the casting molds obtained in Comparative Examples 2 and 3 were employed, double-sided progressive dioptric power lenses were obtained by cast polymerization by the same method as in Example 4. The astigmatism of the lenses obtained was 0.06 D as measured by the above-described method.

The standard for determining astigmatism in finished lenses is normally ± 0.045 D or less.
In contrast to the lens obtained in Comparative Example 3 with astigmatism falling outside the above standard, it was possible to obtain a progressive dioptric power lens within the standard in Example 4. These results indicated that by controlling the generation of astigmatism that is not necessary in eyeglass lens correction based on the present invention, it was possible to provide an eyeglass lens affording good wear sensation.

The present invention permits the easy manufacturing of progressive dioptric power lens casting molds with good productivity. The present invention further permits the manufacturing of eyeglass lenses affording good wear sensation.

## Claims

1. A method of manufacturing a lens casting mold by introducing a forming mold, with a forming surface on which a glass material being formed is positioned, into a continuous heating furnace and conducting thermal treatment while conveying the forming mold in the furnace to form an upper surface of the glass material being formed into a shape of a molding surface for forming a surface comprising a progressive surface or a progressive element, comprising:

   controlling a temperature of the continuous heating furnace so that the continuous heating furnace comprises a temperature rising region having a temperature distribution such that the temperature rises in a conveyance direction of the forming mold;
   utilizing a forming mold having a curvature distribution on the forming surface as the forming mold; and
   specifying a separation distance between the forming surface of the forming mold and a lower surface of the glass material being formed in two or more spots before introduction to the continuous heating furnace;
   conveying the forming mold in the temperature rising region so that a portion with the greatest separation distance among the specified separation distances is comprised in a portion on a side of the conveyance direction as divided in two by a virtual line, the virtual line running orthogonally to the conveyance direction of the forming mold and passing through a geometric center of the forming surface.

2. The method of manufacturing according to claim 1, wherein the conveying in the temperature rising region is conducted such that a direction running from the geometric center of the forming surface toward the portion with the greatest separation distance approximately overlaps the conveyance direction.

3. The method of manufacturing according to claim 1 or 2, wherein the temperature of the continuous heating furnace is controlled so as to comprise, from a forming mold introduction inlet side, the temperature rising region, a constant temperature maintenance region, and a cooling region in this order.

4. The method of manufacturing according to any of claims 1 to 3, comprising subjecting the forming mold to rotation and fluctuation in the temperature rising region.

5. The method of manufacturing according to claim 4, wherein
   the lens casting mold is a progressive dioptric power lens casting mold, and
   a fluctuation angle and amplitude in the rotation and fluctuation is determined based on an added dioptric powder and/or an inset amount of the progressive dioptric power lens.

6. The method of manufacturing according to claim 4 or 5, wherein, in the rotation and fluctuation, the fluctuation angle ranges from $\pm 5$ to 45° relative to the conveyance direction and the amplitude ranges from 0.01 to 1 Hz.

7. The method of manufacturing according to any of claims 3 to 6, comprising rotating the forming mold in the constant temperature maintenance region so that the portion with the greatest separation distance is comprised in a portion on an opposite side from the side in the conveyance direction as divided in two by a virtual line running orthogonally to the conveyance direction of the forming mold and passing through a geometric center of the forming surface.

8. The method of manufacturing according to any of claims 3 to 7, wherein a temperature of the glass material being formed that is positioned on the forming mold being conveyed in the constant temperature maintenance region is equal to or higher than a glass transition temperature of the glass.

9. A method of manufacturing a lens casting mold by introducing a forming mold, with a forming surface on which a glass material being formed is positioned, into a continuous heating furnace and conducting thermal treatment while conveying the forming mold in the furnace to form an upper surface of the glass material being formed into a shape of a molding surface for forming a surface comprising a progressive element or a progressive surface, comprising:

   utilizing a forming mold having a curvature distribution on the forming surface as the forming mold; and

providing a forming mold position control region in the continuous heating furnace, directly or indirectly measuring a temperature at multiple measurement points on the forming surface in the forming mold position control region, and conveying the forming mold so that a portion on the forming surface of greatest curvature is present in a high temperature portion that has been determined based on the measurement result, as well as
specifying a virtual line A passing through a geometric center and a maximum temperature point among the multiple measurement points, and then determining a portion containing the maximum temperature point as divided in two by a virtual line B running orthogonally to the virtual line A and passing through the geometric center as the high temperature portion.

**10.** The method of manufacturing according to claim 9, comprising conveying the forming mold so that a direction running from the geometric center toward the maximum temperature point on the virtual line A approximately overlaps a direction on which an average curvature from the geometric center to a perimeter portion of the forming surface peaks.

**11.** The method of manufacturing according to claim 9 or 10, wherein the portion on the forming surface of greatest curvature is at a position corresponding to a reference point for measurement of near portion of the lens.

**12.** The method of manufacturing according to any of claims 9 to 11, wherein the forming mold position control region comprises a region in which a temperature of the upper surface of the glass material being formed reaches equal to or greater than a temperature of a glass transition temperature Tg - 100°C.

**13.** The method of manufacturing according to any of claims 9 to 12, wherein a temperature of the continuous heating furnace is controlled so as to comprise a temperature rising region having a temperature distribution such that the temperature rises in a conveyance direction of the forming mold and the temperature rising region comprises the forming mold position control region.

**14.** A method of manufacturing an eyeglass lens comprising:

manufacturing a lens casting mold by the manufacturing method according to any of claims 1 to 13; and
manufacturing an eyeglass lens by cast polymerization with the lens casting mold that has been manufactured, or some part thereof, as a casting mold.

**15.** The method of manufacturing an eyeglass lens according to claim 14, wherein the eyeglass lens is a progressive dioptric power lens.

[Fig. 1]

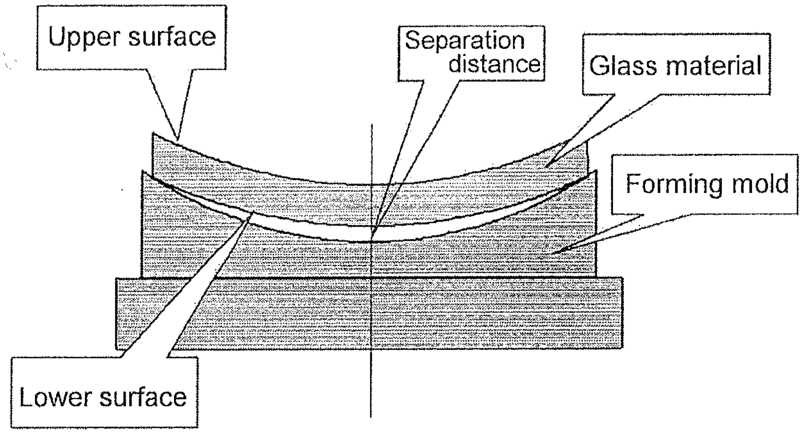


(a) Before heating

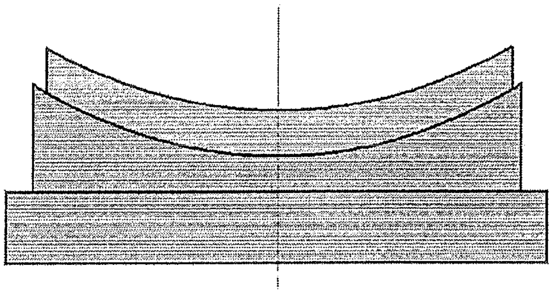

(b) After heating

[Fig. 2]

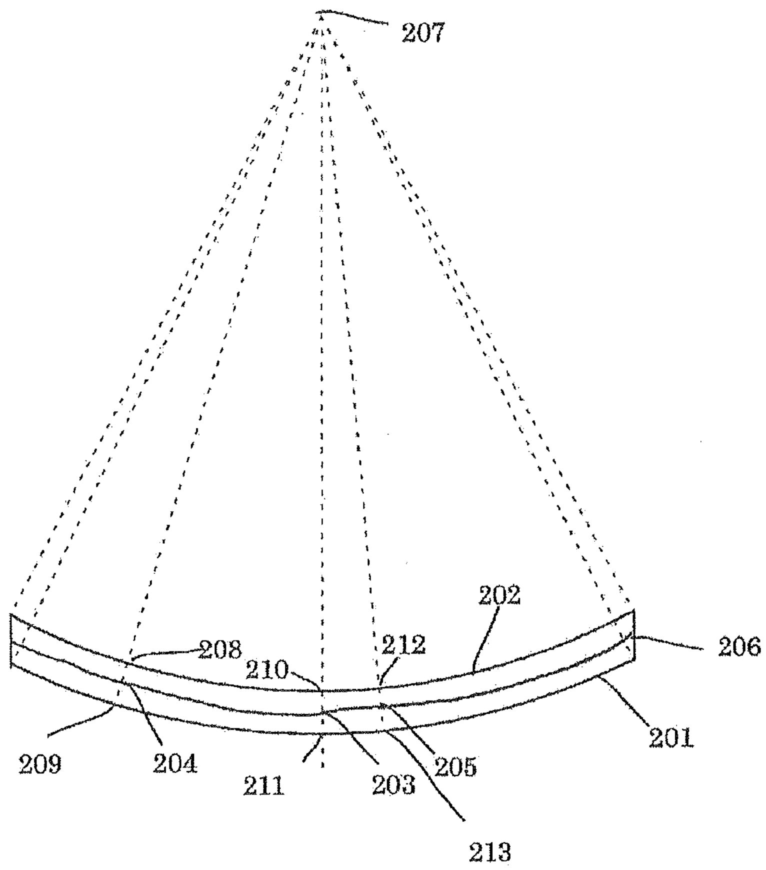

[Fig. 3]

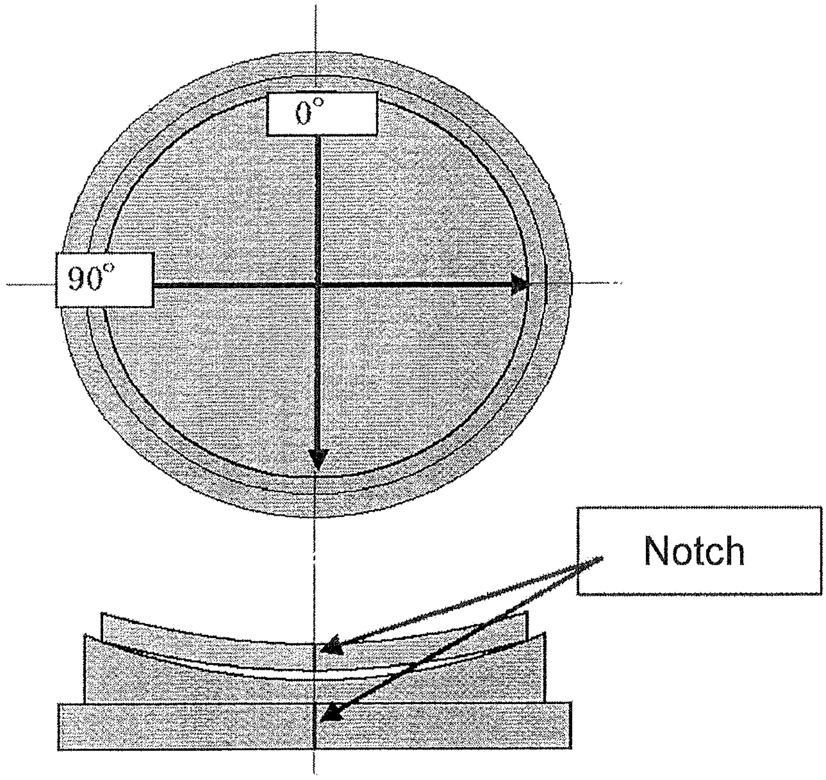

[Fig. 4]

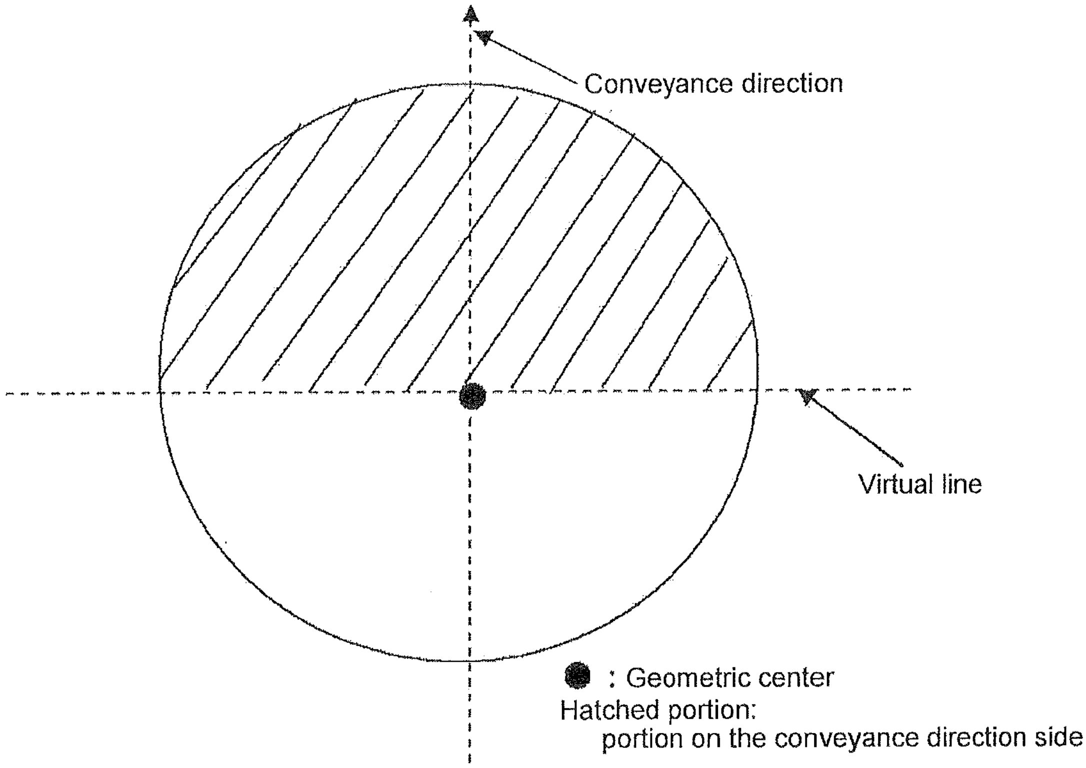
Conveyance direction
Virtual line
: Geometric center
Hatched portion:
portion on the conveyance direction side

[Fig. 5]

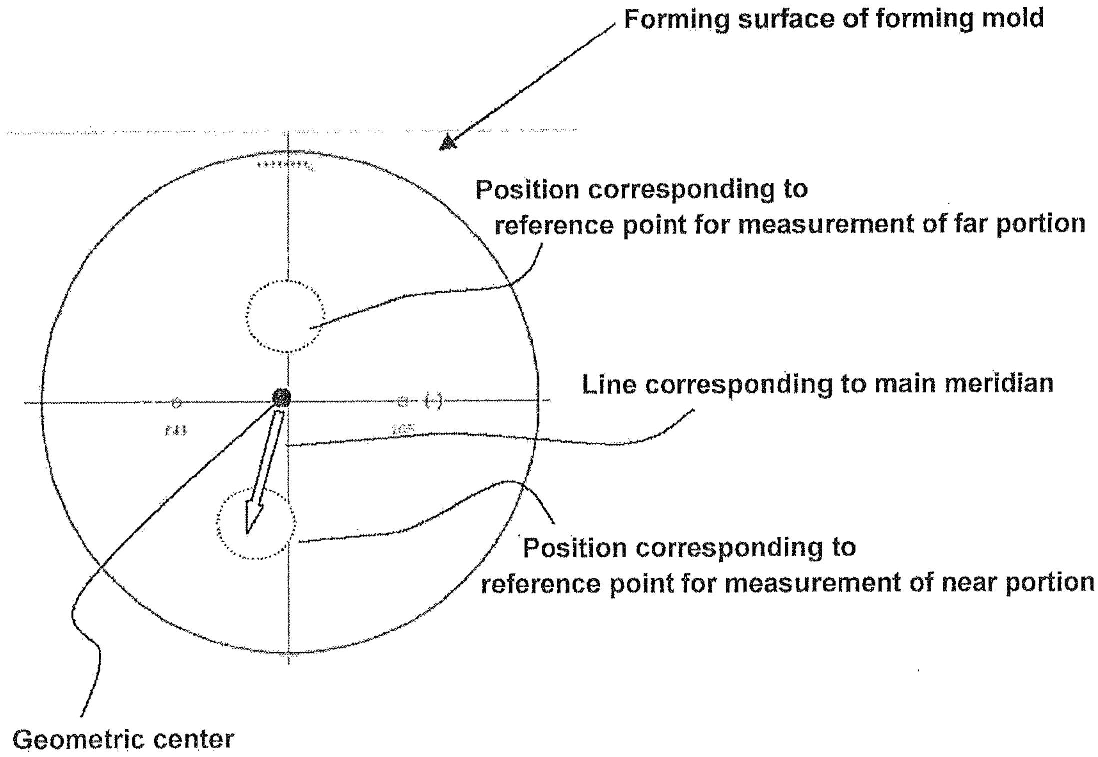
Forming surface of forming mold
Position corresponding to
reference point for measurement of far portion
Line corresponding to main meridian
Position corresponding to
reference point for measurement of near portion
Geometric center

[Fig. 6]

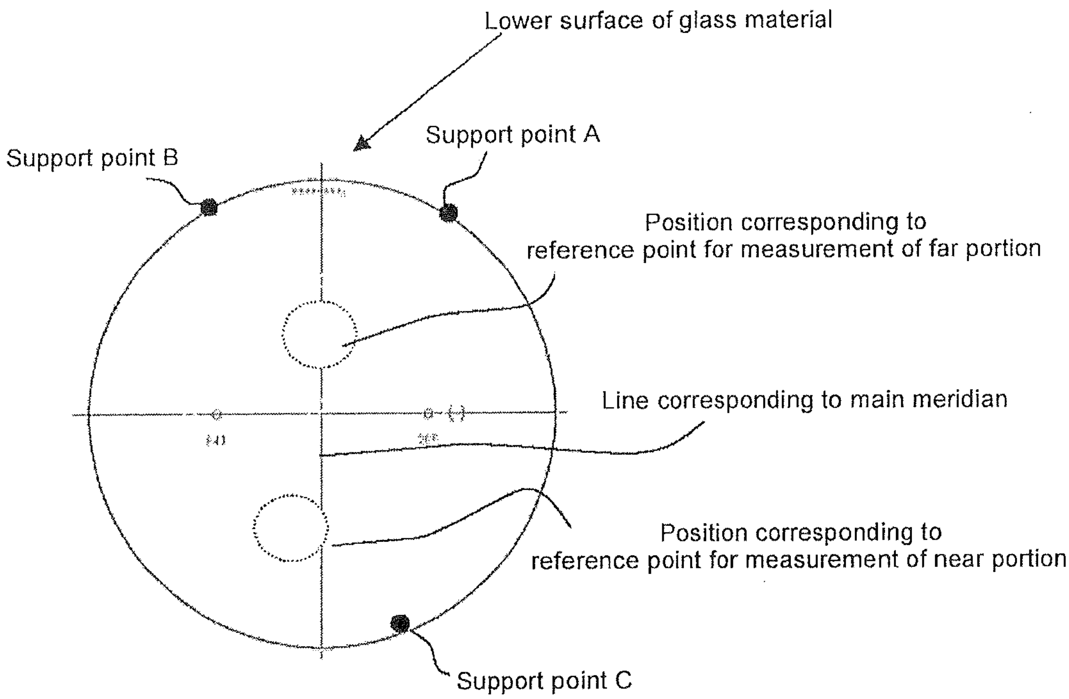
Lower surface of glass material
Support point A
Support point B
Position corresponding to reference point for measurement of far portion
Line corresponding to main meridian
Position corresponding to reference point for measurement of near portion
Support point C

[Fig. 7]

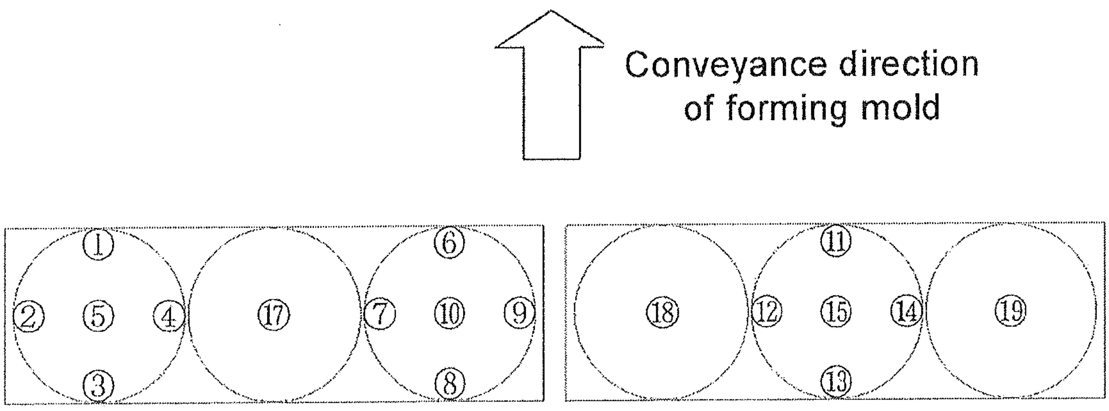
Conveyance direction of forming mold
①
②
⑤
④
⑰
⑥
⑦
⑩
⑨
③
⑧
⑱
⑪
⑫
⑮
⑭
⑲
⑬

[Fig. 8]

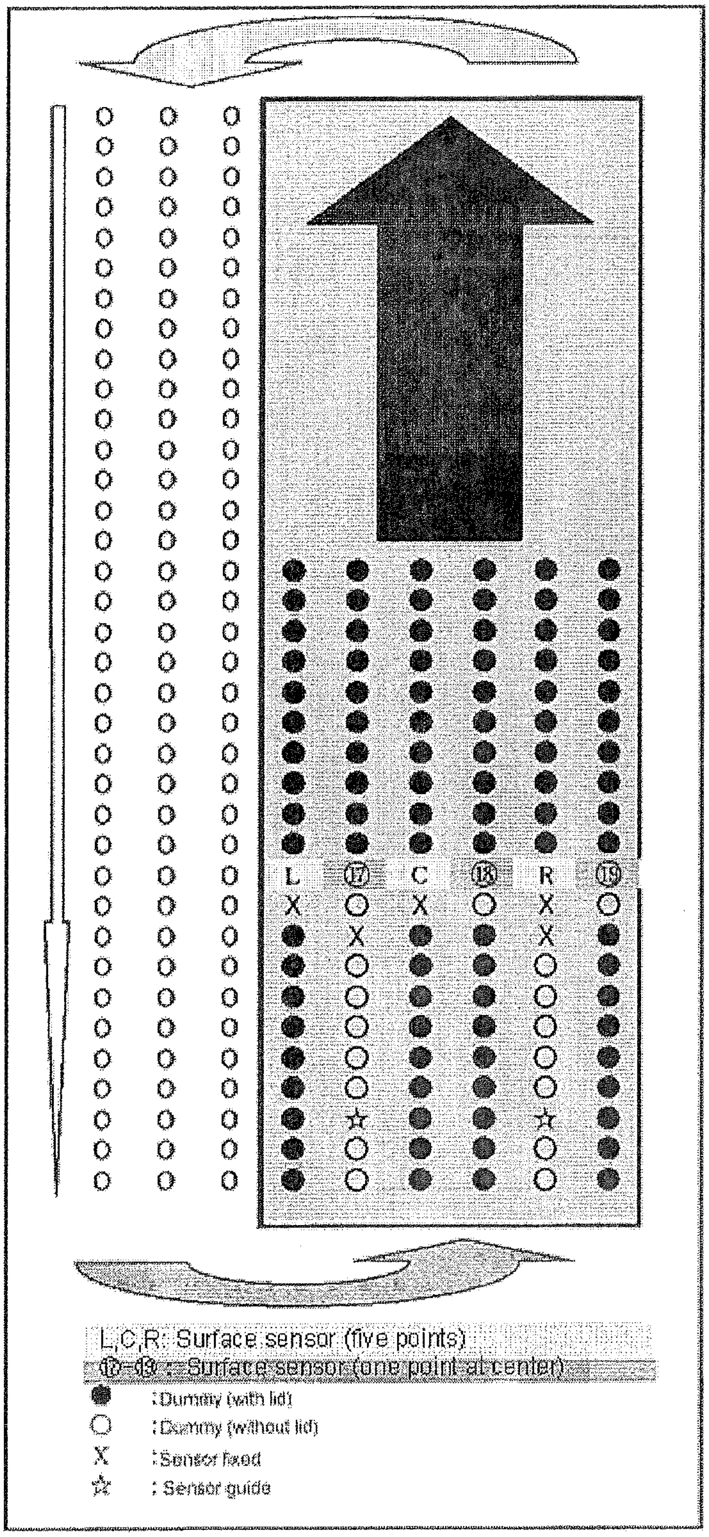
L
⑰
C
⑱
R
⑲
L,C,R: Surface sensor (five points)
⑰-⑲ : Surface sensor (one point at center)
: Dummy (with lid)
: Dummy (without lid)
: Sensor fixed
: Sensor guide

[Fig. 9]

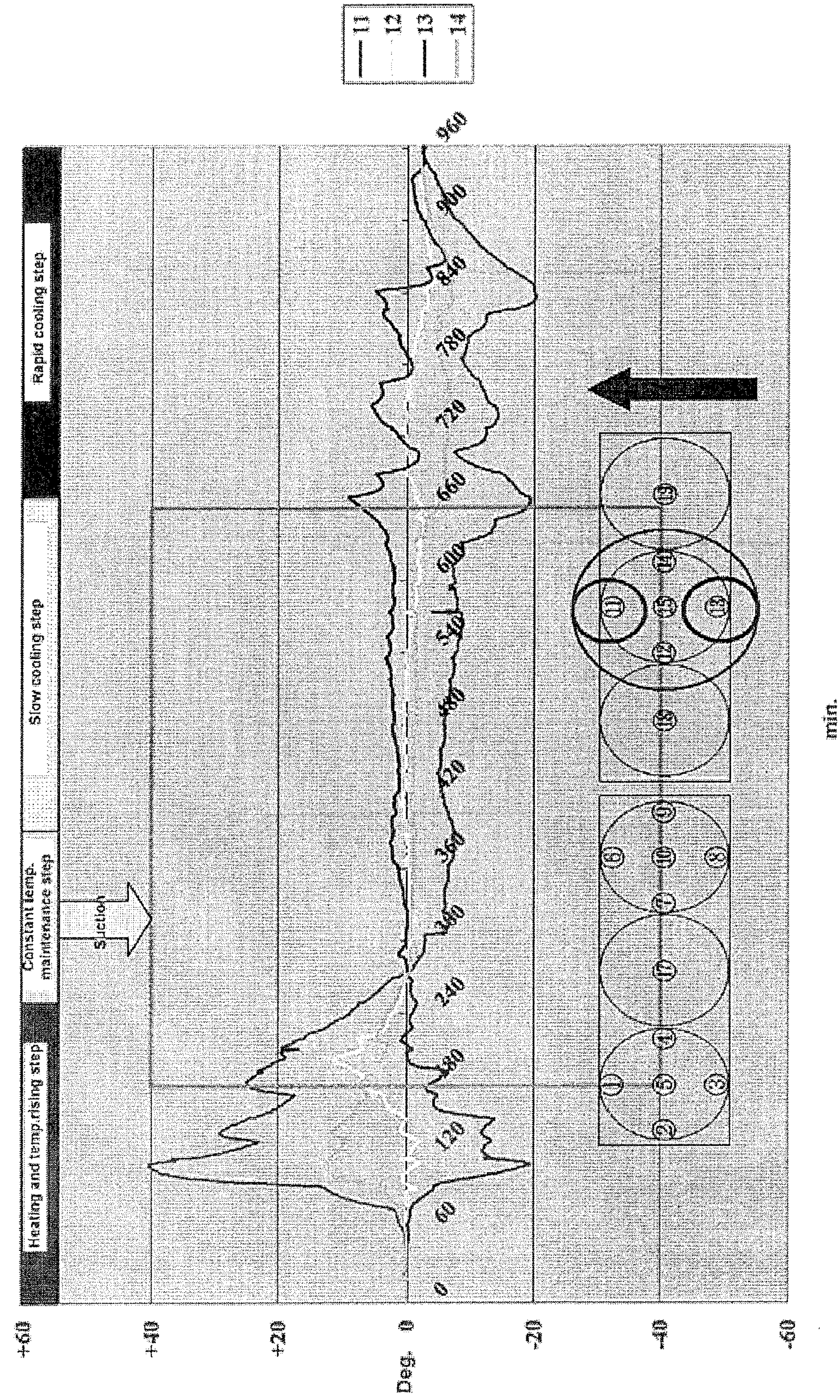
11
12
13
14
Heating and temp.rising step
Constant temp. maintenance step
Slow cooling step
Rapid cooling step
Suction
Deg.
min.
+60
+40
+20
0
-20
-40
-60
0
60
120
180
240
300
360
420
480
540
600
660
720
780
840
900
960

[Fig. 10]

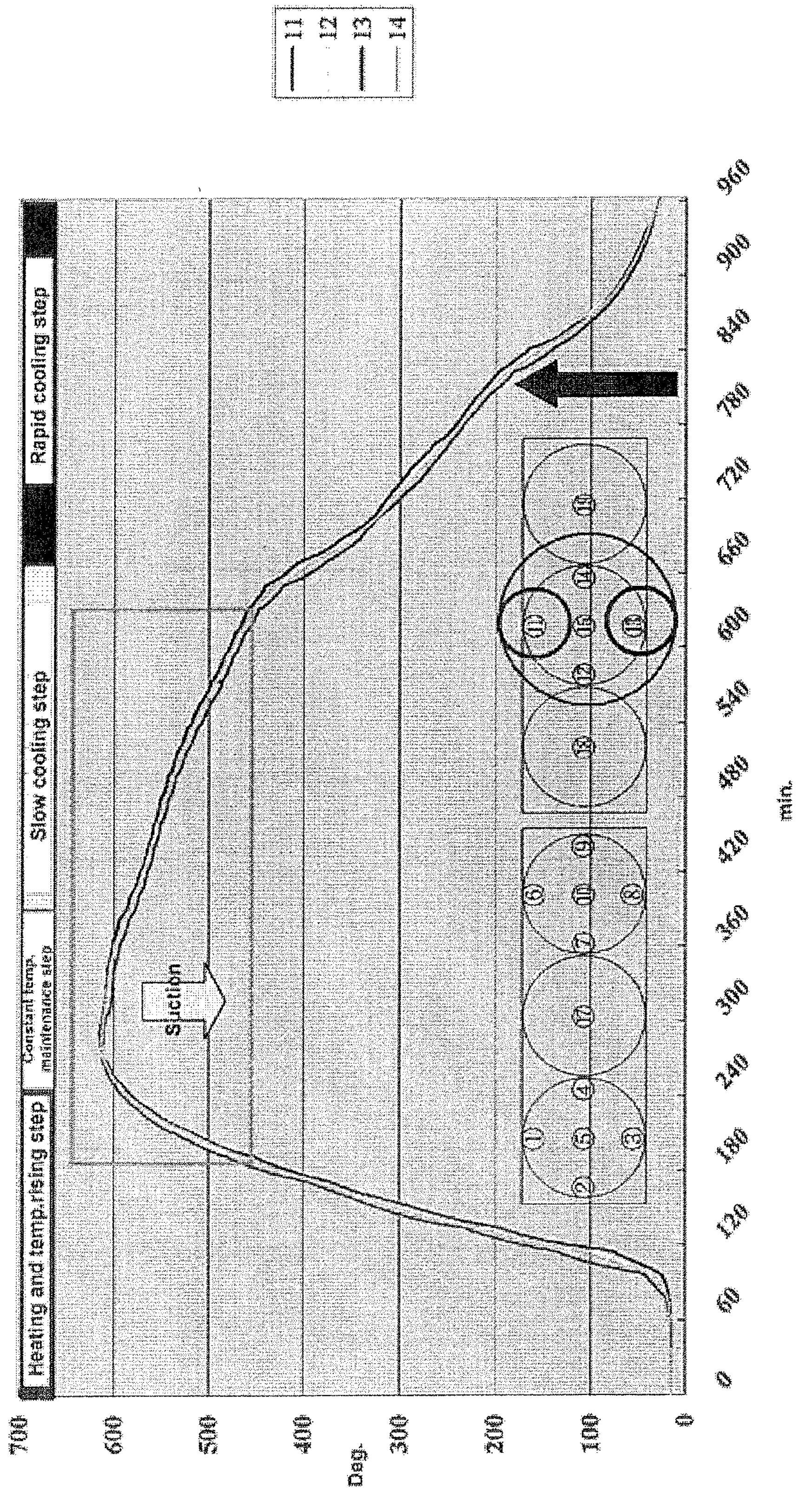
11
12
13
14
Heating and temp. rising step
Constant temp. maintenance step
Slow cooling step
Rapid cooling step
Suction
Deg.
700
600
500
400
300
200
100
0
min.
0
60
120
180
240
300
360
420
480
540
600
660
720
780
840
900
960

[Fig. 11]

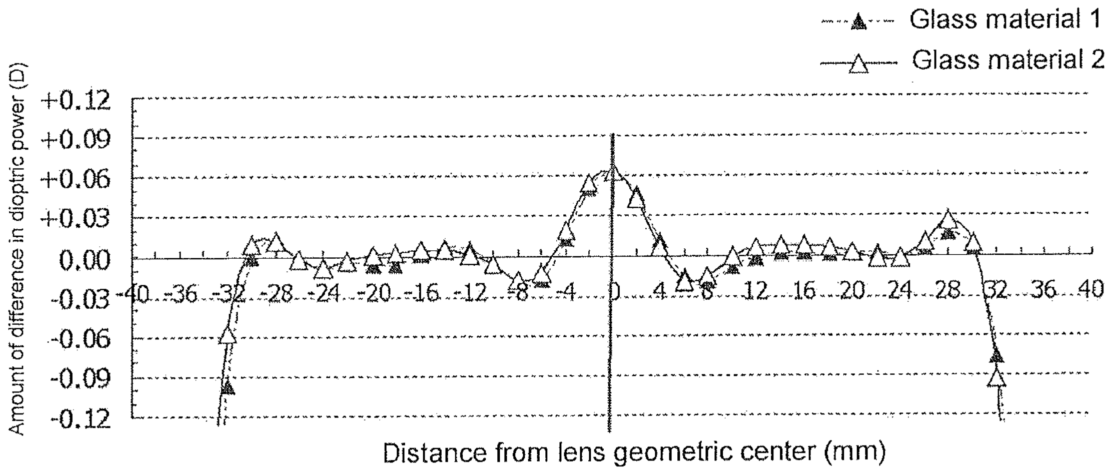
Glass material 1
Glass material 2
Amount of difference in dioptric power (D)
+0.12
+0.09
+0.06
+0.03
0.00
-0.03
-0.06
-0.09
-0.12
-40 -36 -32 -28 -24 -20 -16 -12 -8 -4 0 4 8 12 16 20 24 28 32 36 40
Distance from lens geometric center (mm)

[Fig. 12]

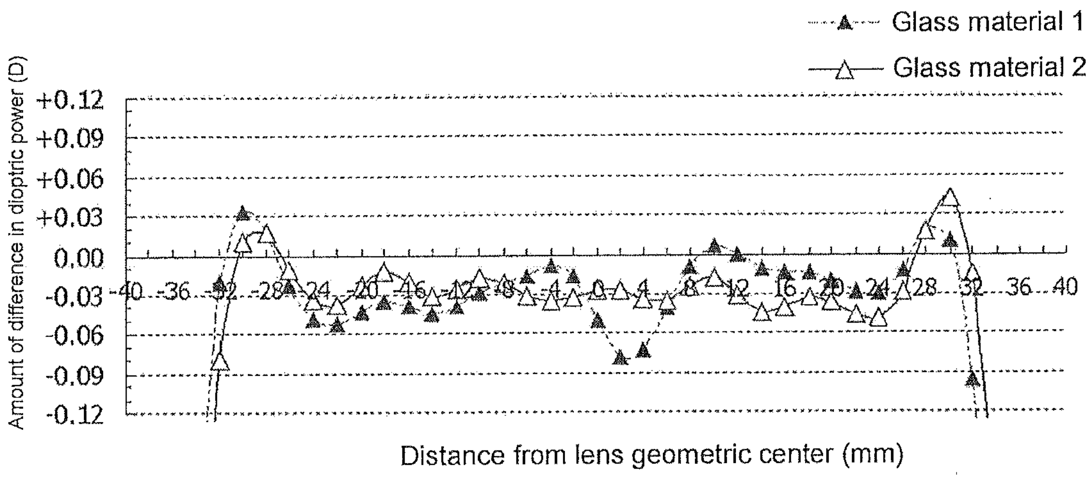
Glass material 1
Glass material 2
Amount of difference in dioptric power (D)
+0.12
+0.09
+0.06
+0.03
0.00
-0.03
-0.06
-0.09
-0.12
-40 -36 -32 -28 -24 -20 -16 -12 -8 -4 0 4 8 12 16 20 24 28 32 36 40
Distance from lens geometric center (mm)

[Fig. 13]

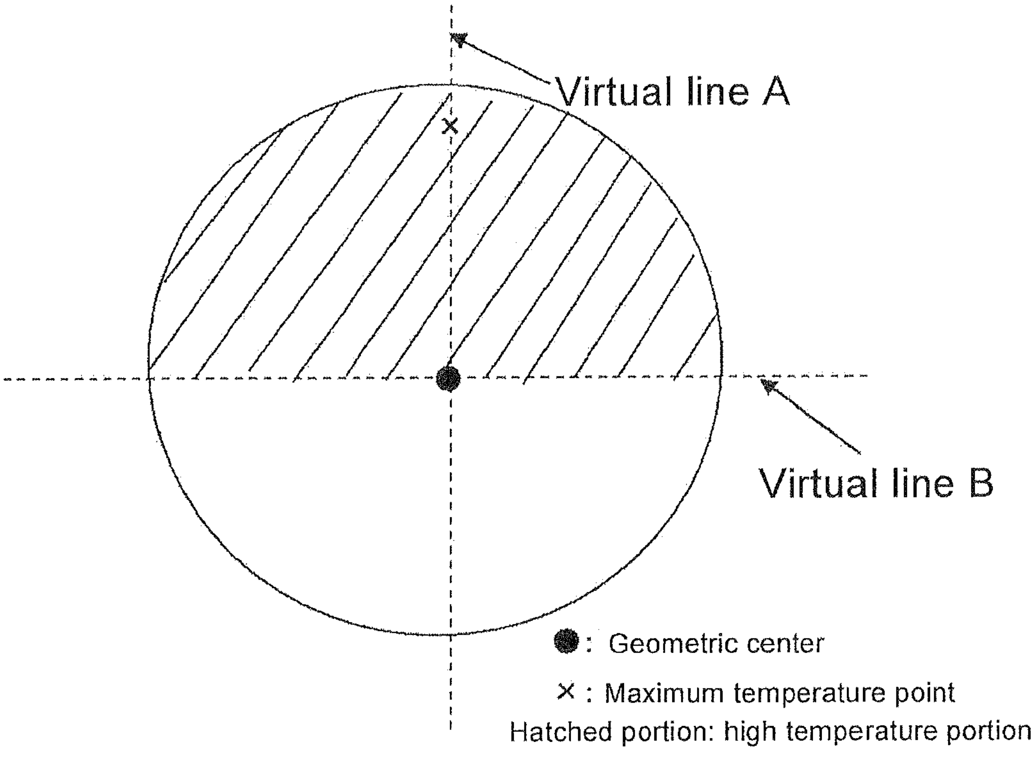
Virtual line A
Virtual line B
●: Geometric center
×: Maximum temperature point
Hatched portion: high temperature portion

[Fig. 14]

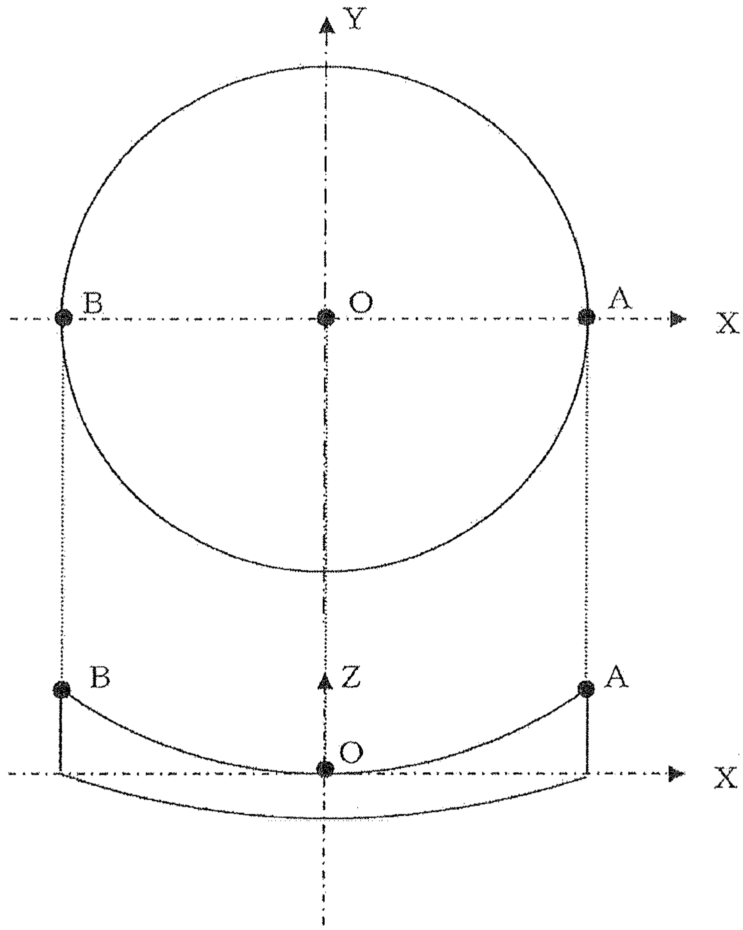

[Fig. 15]

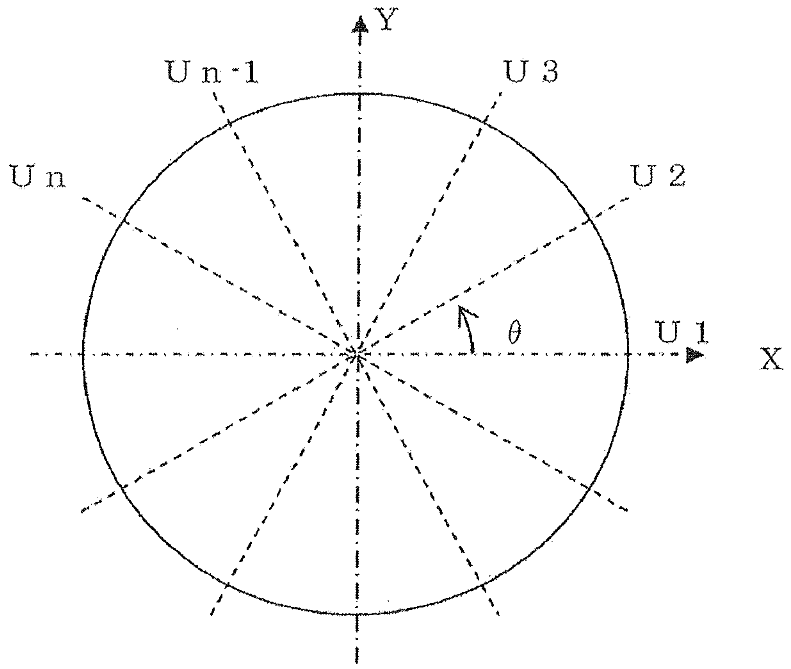


[Fig. 16]

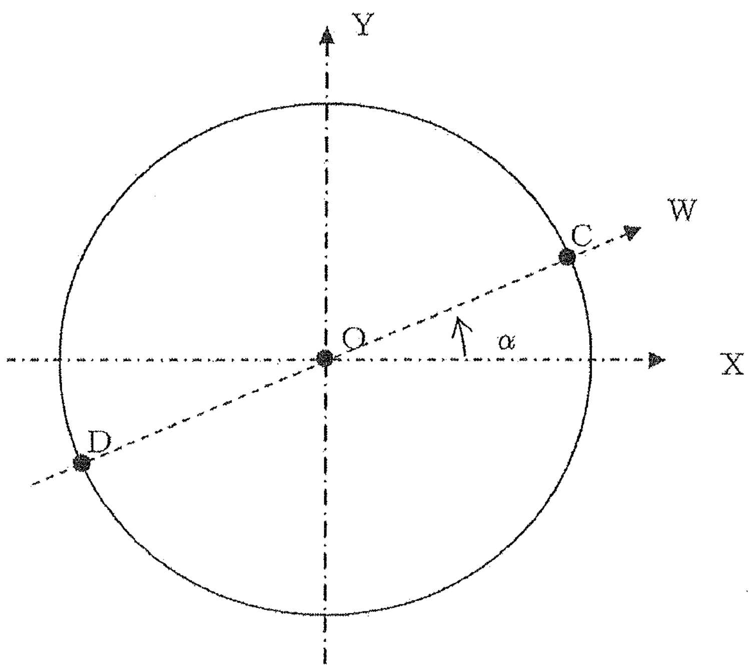

[Fig. 17]

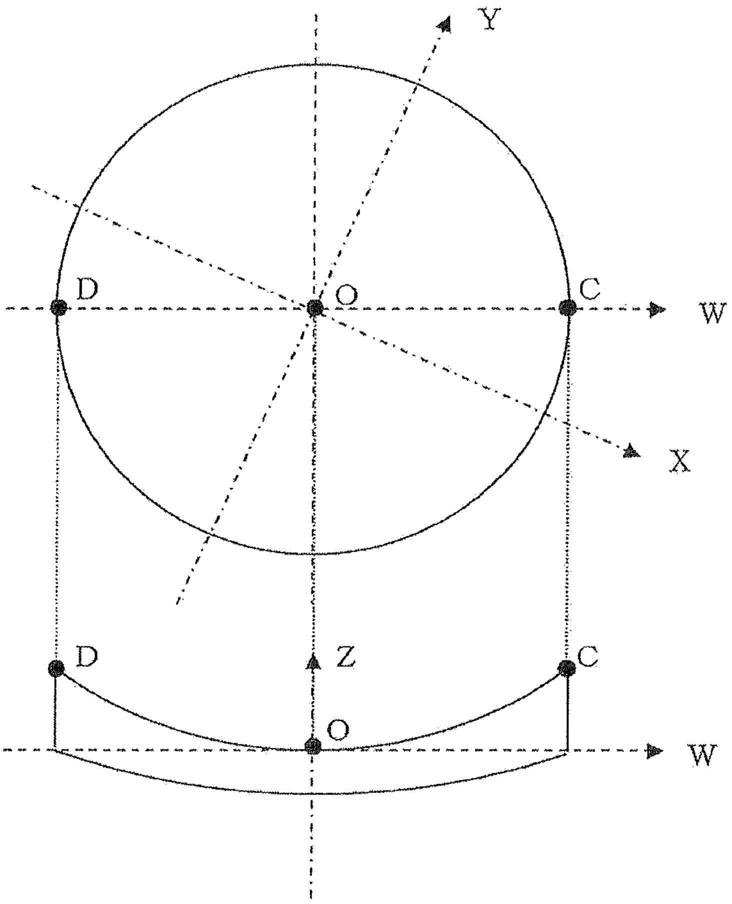

[Fig. 18]

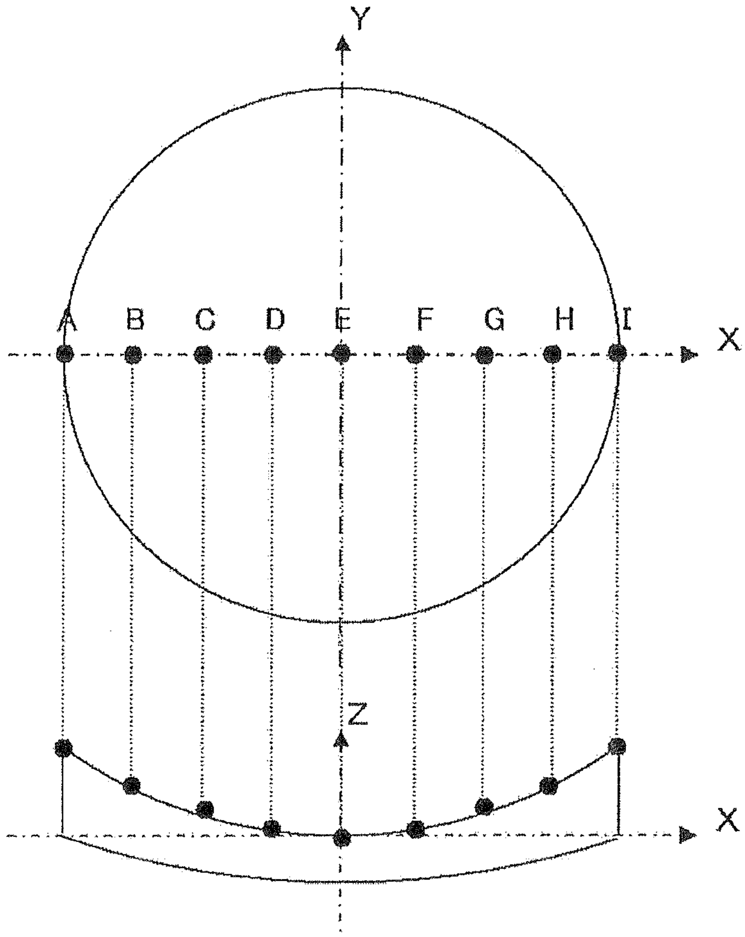

[Fig. 19]

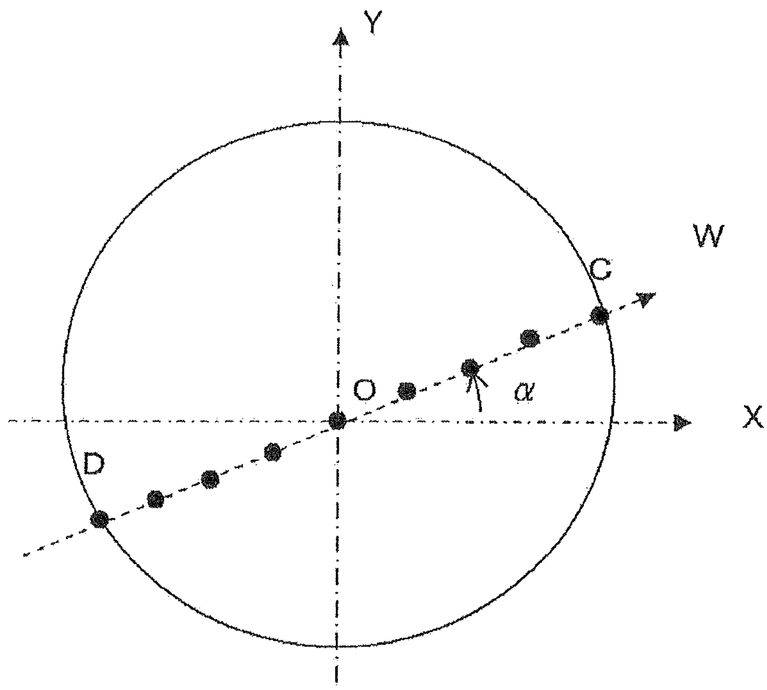

[Fig. 20]

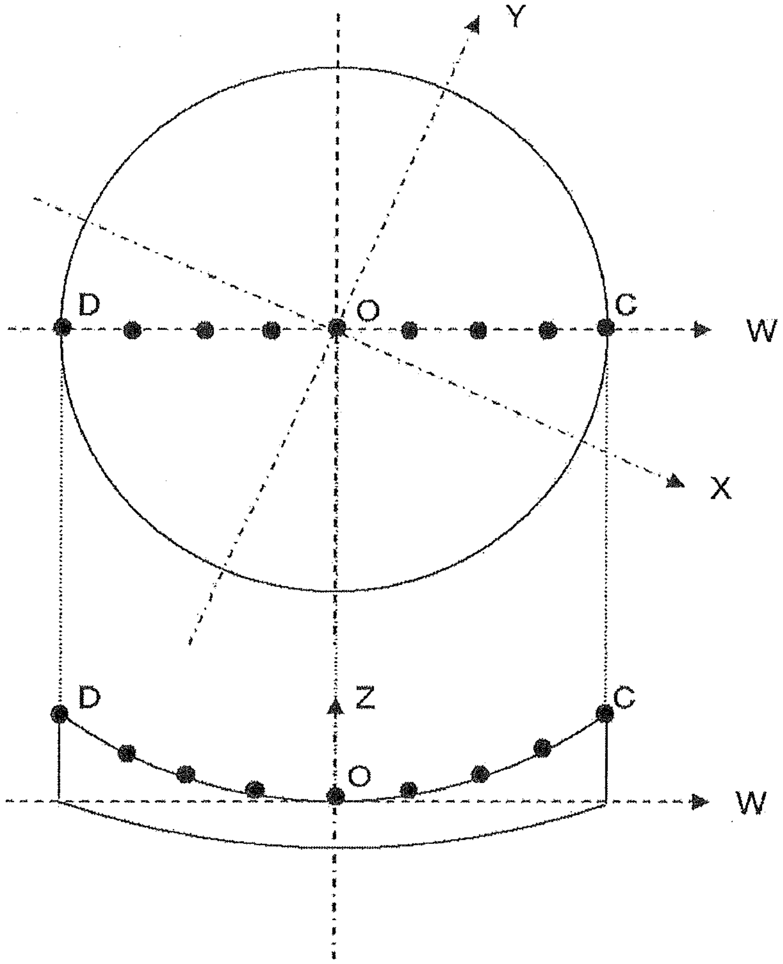

## INTERNATIONAL SEARCH REPORT

International application No.
PCT/JP2010/001343

**A. CLASSIFICATION OF SUBJECT MATTER**
*B29C33/38*(2006.01)i, *B29C33/42*(2006.01)i, *C03B23/025*(2006.01)i, *G02B3/00* (2006.01)i, *G02C7/06*(2006.01)i, *B29L11/00*(2006.01)n

According to International Patent Classification (IPC) or to both national classification and IPC

**B. FIELDS SEARCHED**

Minimum documentation searched (classification system followed by classification symbols)
B29C33/00-33/76, B29C39/00-39/44, C03B23/02-23/037, G02B3/00, G02C7/06, B29L11/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| E,X | WO 2009/096085 A1 (Hoya Corp.), 06 August 2009 (06.08.2009), entire text (Family: none) | 1-15 |
| A | WO 2007/058353 A1 (Hoya Corp.), 24 May 2007 (24.05.2007), entire text & US 2009/0108477 A1 & US 2009/0127727 A1 & EP 1961709 A1 & EP 1964819 A1 & WO 2007/058352 A1 & WO 2007/063734 A1 & WO 2007/063735 A1 | 1-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 May, 2010 (10.05.10) | 25 May, 2010 (25.05.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2010/001343

C (Continuation). DOCUMENTS CONSIDERED TO BE RELEVANT

| Category* | Citation of document, with indication, where appropriate, of the relevant passages | Relevant to claim No. |
|---|---|---|
| A | JP 2008-221720 A (Ito Optical Industrial Co., Ltd.), 25 September 2008 (25.09.2008), claims 1 to 4; fig. 5, 9 (Family: none) | 1-15 |
| A | JP 63-306390 A (NGK Spark Plug Co., Ltd.), 14 December 1988 (14.12.1988), claims; fig. 1, 2 (Family: none) | 4-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009046706 A
- JP 2009072986 A
- JP 6130333 A
- JP 4275930 A
- JP 63306390 A
- WO 2007058353 A1


### Non-patent literature cited in the description


- **Kouzo ICHIDA ; Fujiichi YOSHIMOTO.** Series: New Applications of Mathematics 20, Spline Functions and Their Applications. Kyoiku Shuppan